# EUROPEAN PATENT SPECIFICATION

(11) **EP 2 623 914 B1**
(45) Date of publication and mention of the grant of the patent: **26.12.2018**
(21) Application number: 11828265.6
(22) Date of filing: 03.03.2011
(51) Int. Cl.: F28D 20/00, F24F 5/00, F25B 1/00, F28D 20/02

(54) **HEAT STORAGE DEVICE AND AIR CONDITIONER EQUIPPED WITH SAME**
WÄRMESPEICHERVORRICHTUNG UND KLIMAANLAGE DAMIT
DISPOSITIF DE STOCKAGE DE CHALEUR ET APPAREIL DE CONDITIONNEMENT D'AIR ÉQUIPÉ DE CELUI-CI

(30) Priority: 05.11.2010 JP 2010248071; 28.09.2010 JP 2010216443; 28.09.2010 JP 2010216441
(43) Date of publication of application: 07.08.2013
(73) Proprietor: Panasonic Corporation, Osaka 571-8501 (JP)
(72) Inventor: YAMANAKA, Kanae, Osaka 540 6207 (JP); TSURUDA, Kunihiro, Osaka 540 6207 (JP); INOUE, Shigeyuki, Osaka 540-6207 (JP); AKAMINE, Ikuo, Osaka 540-6207 (JP); TAKAHASHI, Masatoshi, Osaka 540-6207 (JP); KUBO, Tsugio, Osaka 540-6207 (JP); KURISUTANI, Hiroharu, Osaka 540-6207 (JP); IMASAKA, Toshiyuki, Osaka 540-6207 (JP); SUGIO, Takashi, Osaka 540-6207 (JP); NAKAJIMA, Keizo, Osaka 540-6207 (JP)
(74) Representative: Eisenführ Speiser
(86) International application number: PCT/JP2011/001264
(87) International publication number: WO 2012/042695

(56) References cited:
- EP-A1- 2 623 913
- JP-A- 1 010 098
- JP-A- 5 223 410
- JP-A- 8 090 706
- JP-A- 8 183 975
- JP-A- 10 288 359
- JP-A- 2000 119 643
- JP-A- 2000 119 643
- JP-A- 2000 319 648
- JP-A- 2004 101 034
- JP-A- 2004 101 034
- JP-A- 2006 300 492
- JP-A- 2009 019 857
- JP-A- 2010 216 443
- JP-A- 2012 072 935

## Description

### Technical Field

The present invention relates to a thermal-storage device using an aqueous solution as a thermal-storage solution, and an air conditioner provided with the thermal-storage device. A thermal-storage device according to the preamble of claim is known from document JP 2000119643.

### Background Art

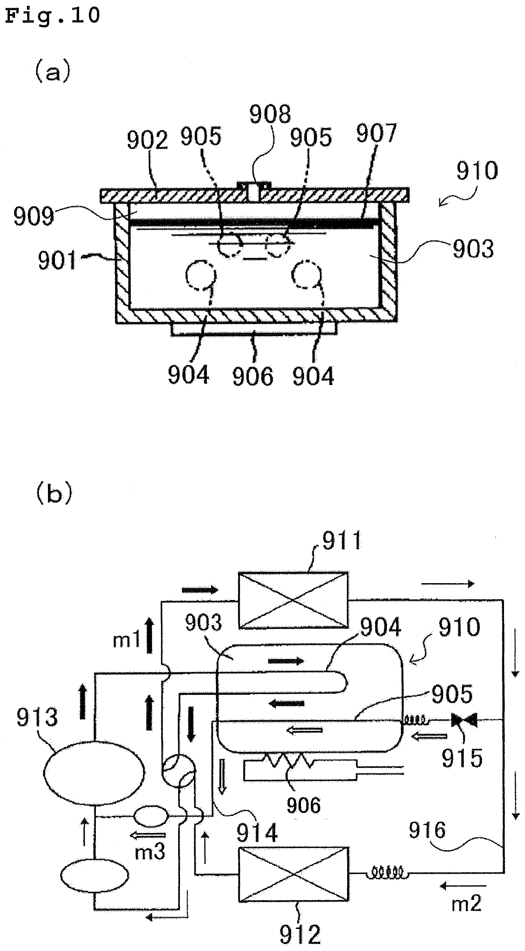

Water has widely been used as a thermal-storage solution (thermal-storage material, thermal-storage medium) of a thermal-storage device since it has relatively large specific heat capacity when compared with other substances, is a liquid at normal temperature, and is also inexpensive. When using as a thermal-storage solution, water is commonly used as an aqueous dihydric alcohol solution containing, as a "coolant", a dihydric alcohol such as ethylene glycol added therein. Specifically, Patent Document 1 discloses, as a thermal-storage device using such thermal-storage solution, the configuration of an open atmospheric type thermal-storage device that is incorporated into a refrigeration cycle of an air conditioner and is provided with a thermal-storage container including a thermal-storage material containing water as a main component. A more specific example of such thermal-storage device will be described with reference to Figs. 10(a) and 10(b), including the configuration applied to an air conditioner.

Fig. 10(a) shows a cross section of a conventional thermal-storage device 910 disclosed in Patent Document 1. In the thermal-storage device 910, a thermal-storage container includes a thermal-storage tank 901 made of metal and a cover body 902 made of metal, and a thermal-storage material 903 is accommodated in the interior space of the thermal-storage tank 901. In order to prevent freezing at low temperature, brine containing water as a main component and 30% ethylene glycol mixed therein is used as the thermal-storage material 903. A plurality of heat-radiating heat exchangers 904 and a plurality of heat-absorbing heat exchangers 905 are provided in the interior space of the thermal-storage tank 901 at the position where the exchangers are immersed in the thermal-storage material 903.

The thermal-storage material 903 stores heat released from the thermal-storage heater 906 and the heat-radiating heat exchangers 904 provided outside the thermal-storage container, and recovers heat by the heat-absorbing heat exchangers 905. Since a refrigerant (not shown) flows inside the heat-absorbing heat exchanger 905, heat is transferred to the refrigerant by recovering heat from the thermal-storage material 903, and thus the temperature of the refrigerant becomes higher. The conventional thermal-storage device 910 enables an improvement in heating startup characteristics in a refrigeration cycle (not shown) disclosed in Patent Document 1 by making use of the thermal-storage and heat recovery.

A 3 mm thick oil film 907 is provided on a surface of the thermal-storage material 903, and this oil film 907 is configured to suppress a decrease in the thermal-storage material 903 due to evaporation. Since a cover body 902 is provided with an opening 908, the opening is configured to suppress excessive pressure rise inside the thermal-storage container due to evaporation or thermal expansion of the thermal-storage material 903. The opening 908 is provided with a steam control unit (not shown) so as not to excessively release steam into the atmosphere. Furthermore, an air layer 909 is formed between the oil film 907 and the cover body 902. The air layer is configured to prevent the thermal-storage material 903 from partially leaking out from the thermal-storage container via the opening 908 (and the steam control unit) due to thermal expansion caused by a temperature rise of the thermal-storage material.

Fig. 10(b) shows a configuration in which the thermal-storage device 910 with the above configuration is incorporated into a refrigeration cycle of an air conditioner. The air conditioner includes an indoor unit 911, an expansion valve (not shown), an outdoor unit 912, a compressor 913, and a pipe 916 that connects them. The indoor unit 911 is provided with an indoor side heat exchanger (not shown) and the outdoor unit 912 is provided with an outdoor side heat exchanger (not shown), and a refrigerant flows inside the pipe. A heating heat pump includes an indoor unit 911, an expansion valve, an outdoor unit 912 and a compressor 913.

Furthermore, a bypass pipe 914 is provided so as to connect a downstream side in a refrigerant flowing direction of the pipe 916 connected to the indoor unit 911, to an upstream side in a refrigerant flowing direction of the pipe 916 connected to the compressor 913. This bypass pipe 914 is provided with a heat-absorbing heat exchanger 905 and is configured to enable the refrigerant to flow by opening a two way valve 915.

With the above configuration, the refrigerant reaches high temperature and high pressure by the compressor 913, and flows inside the pipe 916 along the arrow m1 (filled block arrow) in the drawing, thus reaching the thermal-storage device 910. Heat is released from the high-temperature refrigerant by the heat-radiating heat exchanger 904 and then stored in the thermal-storage material 903 in the thermal-storage device 910. Simultaneously, since the temperature of the thermal-storage material 903 is further raised, for example, to a temperature of 93 to 97°C by the thermal-storage heater 906 attached to the thermal-storage device 910, heat from the thermal-storage heater 906 is also stored in the thermal-storage material 903.

The thermal-storage material 903, the temperature of which was raised to a high temperature by thermal storage, heats the refrigerant flowing through a bypass pipe 914 along the direction indicated by the arrow m3 (open block arrow) in the drawing through a heat-absorbing heat exchanger 905 by opening the two way valve 915. The refrigerant heated by the thermal-storage material 903 (recovered heat from the thermal-storage material 903) reaches the compressor 913 and finally flows up to the indoor unit 911 provided with an indoor side heat exchanger, and then hot air for heating is formed by heat exchanging in this indoor unit 911. The refrigerant, the temperature of which fell to low temperature after heat exchange, flows through the pipe 916 along the direction indicated by the arrow m2 in the drawing, and then returns to the compressor 913 through the outdoor unit 912.

Patent Document 2 discloses a thermal-storage device in which a thermal-storage tank is filled with a latent thermal-storage material containing a hydrated salt as a main component, the device being configured to provide a moisture evaporation prevention film on a surface of the latent thermal-storage material. Specifically, a sodium acetate trihydrated salt containing 1 to 2% of xanthan gum as a thickener mixed therein is exemplified as the latent thermal-storage material, and a paraffin or polymer film is exemplified as the moisture evaporation prevention film on a surface of the latent thermal-storage material. The moisture evaporation prevention film may be basically any film as long as it is less likely to transmit moisture, and may be either a liquid or solid form. However, the Patent Document discloses that the moisture evaporation prevention film is preferably made of a material having flexibility since moisture evaporates to some extent if gaps exist between the film and a surface of the thermal-storage material.

Patent Document 3 discloses a thermal-storage material composition used for a domestic heater/hot water supply, and cooling of electronic parts, the thermal-storage material composition being configured to contain a moisture evaporation inhibitor. Specifically, there is exemplified, as the thermal-storage material composition, a composition prepared by mixing a hydrated salt type thermal-storage material such as sodium acetate trihydrate with a supercooling inhibitor, water, a thickener and a heat transfer accelerator according to the formulation within a predetermined range, followed by melting and stirring. There is also exemplified a composition prepared by adding liquid paraffin as the moisture evaporation inhibitor to the thermal-storage material composition. The moisture evaporation inhibitor is not particularly limited to liquid paraffin as long as it is insoluble in a thermal-storage material and also has a low specific gravity and a high boiling point. For example, animal/vegetable oil, synthetic oil such as silicone oil, and an organic solvent are exemplified.

### Prior Art Documents

### Patent Documents

Patent Document 1: JP H10-288359 A
Patent Document 2: JP S64-10098 A
Patent Document 3: JP 2000-119643 A

### Disclosure of the Invention

### Problems to be Solved by the Invention

It was sometimes impossible to stably use a conventional evaporation prevention layer containing the paraffin, synthetic oil and organic solvent over longer period.

There has hitherto been a demand for an evaporation prevention layer that can be stably used over longer period.

To meet such demand, an object of the present invention is to provide a thermal-storage device using an evaporation prevention layer that can be used more stably over the longer period, and an air conditioner provided with the thermal-storage device.

### Means for Solving the Problems

The thermal-storage device of the present invention includes a thermal-storage container in which a thermal-storage solution layer composed of a thermal-storage solution comprising water, a heat exchanger immersed in the thermal-storage solution layer, an evaporation prevention layer disposed on the upper portion of the thermal-storage solution layer, and an air layer disposed on the upper portion of the evaporation prevention layer are disposed in the interior space thereof, the evaporation prevention layer including a solvent composition of at least one water-insoluble solvent, the solvent composition having a pour point lower than normal temperature, and the water-insoluble solvent containing saturated alkanes containing at least one hydrocarbon having carbon atoms within a range from 24 to 44. The saturated alkanes are formed when α-olefin having 8 to 10 carbon atoms is subjected to a hydrogenoation treatment after a polymerization reaction.

The evaporation prevention layer is composed of a solvent composition of at least one water-insoluble solvent and the solvent composition has a pour point lower than normal temperature, and the water-insoluble solvent contains at least one hydrocarbon having carbon atoms within a range from 24 to 44. Therefore, the evaporation prevention layer can be used more stably over longer period. Accordingly, the thermal-storage device can also be used more stably over longer period.

Furthermore, the evaporation prevention layer having such physical properties ensure reduction in corrosion of the heat exchanger since an organic acid is formed in a small amount and also oxygen in air is less likely to penetrate into a thermal-storage solution. This evaporation prevention layer can ensure prevention or suppression of evaporation of the thermal-storage solution layer since its pour point is lower than normal temperature (lower than ambient temperature). As a result, evaporation of the thermal-storage solution layer can be certainly from being prevented or suppressed, and thus the thermal-storage layer can maintain satisfactory thermal-storage characteristics over the long period without requiring replenishment.

In the evaporation prevention layer of the thermal-storage device, the solvent composition preferably has a pour point lower than a solidifying point of the thermal-storage solution. Even if the temperature of the thermal-storage device decreases until the thermal-storage solution is solidified, the solvent composition can maintain its fluidity, and thus effectively enabling realization of the evaporation prevention function even in a state at low temperature. Even if the thermal-storage solution is solidified, the solvent composition is not yet solidified, and thus making it possible to reduce volume expansion caused by solidification of the thermal-storage solution, and to still further ensure the pressure relaxation function.

The thermal-storage device according to the present invention is preferably provided with a protection unit that is disposed so as to come in contact with an interface between one layer selected from the group consisting of the thermal-storage solution layer, the evaporation prevention layer, the main evaporation prevention layer and the sub evaporation prevention layer, and the air layer, and is configured to isolate the heat exchanger from the interface.

In the thermal-storage container, by isolating a heat exchanger from an interface between one layer selected from the group consisting of the thermal-storage solution layer, the evaporation prevention layer, and an air layer using a protection unit, it is possible to provide a thermal-storage device that prevents interfacial corrosion in the heat exchanger, and is inexpensive and also has both heat capacity and durability.

It is preferred that the thermal-storage container includes a cover portion provided with an opening through which the heat exchanger passes, and the protection unit is a heat exchanger connector that connects the cover portion to the heat exchanger. Thereby, corrosion of the heat exchanger can be prevented more certainly.

It is preferred that the thermal-storage container includes a cover portion having an opening through which the heat exchanger passes, and the opening is disposed in a recessed portion provided in a part of the cover portion, and the recessed portion is disposed to come in contact with the interface to form the protection unit.

It is possible to inexpensively form a thermal-storage device since the protection unit can be composed of the cover portion.

The cover portion is preferably provided with an internal pressure control unit configured to enable communication between the air layer and the atmosphere at the position in contact with the air layer.

Because of opening under a predetermined pressure lower than a pressure withstanding strength of a thermal-storage container, a thermal-storage container can be formed using a container other than a pressure resistant container.

The heat exchanger may be partially made of copper or aluminum. The reason is that corrosion can be prevented even if the heat exchanger is formed of copper or aluminum.

In the thermal-storage device according to the present invention, the thermal-storage solution is preferably an aqueous solution containing a dihydric alcohol.

The thermal-storage solution is preferably an aqueous solution containing an antioxidant that prevents oxidation of the dihydric alcohol.

In the thermal-storage device according to the present invention, the thermal-storage solution is preferably an aqueous solution with pH 6 to 11.

The thermal-storage solution preferably contains, as a main component, a mixed solution of water and an unfreezable dihydric alcohol.

The unfreezable dihydric alcohol(s) is/are preferably ethylene glycol and/or propylene glycol.

In the thermal-storage device according to the present invention, the thermal-storage container can be provided so as to surround a heat source.

The thermal-storage container is preferably in contact with the heat source via a thermal conductive member.

The present invention also includes an air conditioner including any one of the above thermal-storage devices.

### Effects of the Invention

According to the present invention, it becomes possible to provide a thermal-storage device using an evaporation prevention layer that can be more stably used over longer period, and an air conditioner provided with the thermal-storage device.

### Brief Description of the Drawings

Fig. 1 is a schematic cross-sectional view showing an example of the configuration a thermal-storage device according to a first embodiment of the present invention.
Fig. 2 is an effect characteristic graph (analytical results of the composition of an evaporation prevention layer) of the thermal-storage device according to the first embodiment of the present invention.
Fig. 3 is an effect characteristic graph (characteristic graph showing a relation between the water quality pH and the copper ion concentration) of the thermal-storage device according to the first embodiment of the present invention.
Fig. 4(a) is a schematic cross-sectional view showing an example of the configuration of a thermal-storage device according to a second embodiment of the present invention, and Fig. 4(b) is a schematic view showing a change in a phase state due to temperature change in a thermal-storage solution layer and an evaporation prevention layer formed inside the thermal-storage device shown in Fig. 4(a).
Fig. 5(a) is a schematic cross-sectional view showing an example of the configuration of thermal-storage device according to a third embodiment of the present invention, and Fig. 5(b) is a schematic view showing a change in phase state due to temperature change in a thermal-storage solution layer and an evaporation prevention layer formed inside the thermal-storage device shown in Fig. 5(a).
Fig. 6 is a cross-sectional view of a thermal-storage device according to a fourth embodiment of the present invention.
Fig. 7 is a cross-sectional view of a thermal-storage device according to a fifth embodiment of the present invention.
Fig. 8(a) is a transverse cross-sectional view showing an example of the configuration of a thermal-storage device according to a sixth embodiment of the present invention, and Fig. 8(b) is a longitudinal cross-sectional view of the thermal-storage device shown in Fig. 8(a).
Fig. 9 is a block diagram showing an example of the configuration of an air conditioner according to a seventh embodiment of the present invention.
Fig. 10(a) is a cross-sectional view showing an example of the configuration of a conventional thermal-storage device, and Fig. 10(b) is a block diagram showing an example of the configuration of an air conditioner provided with the thermal-storage device shown in Fig. 10(a).

### Detailed Description of the Invention

Preferred embodiments the present invention will be described with reference to the accompanying drawings. Throughout the drawings, identical or corresponding components are denoted by identical reference numerals, and repetitive descriptions are omitted.

### (First Embodiment)

### [Configuration of Thermal-Storage Device]

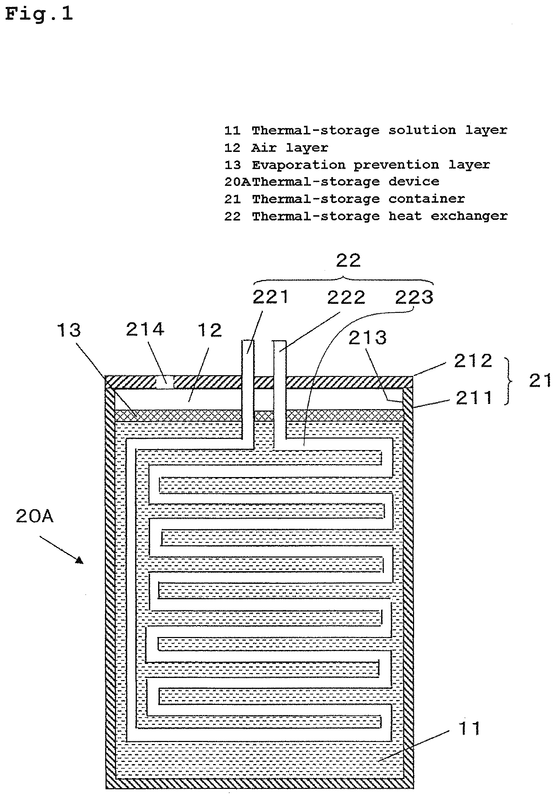

First, specific configuration of a thermal-storage device according to the present embodiment will be specifically described with reference to Fig. 1.

As shown in Fig. 1, a thermal-storage device according to the present embodiment 20A is configured to be provided in the interior space thereof with a thermal-storage solution layer 11 composed of a thermal-storage solution that is composed of at least water (that comprises at least water), a heat exchanger 22 immersed in the thermal-storage solution layer 11, and an evaporation prevention layer 13 disposed on the upper portion of the thermal-storage solution layer 11. This evaporation prevention layer 13 is composed of a solvent composition of at least one water-insoluble solvent (contains a solvent composition) and this solvent composition has a pour point lower than normal temperature (lower than ambient temperature), and the water-insoluble solvent contains at least one hydrocarbon having carbon atoms within a range from 24 to 44.

A thermal-storage container 21 includes a box portion 211 and a cover portion 212. The box portion 211 is a body of the thermal-storage container 21 and has an approximately rectangular shape and a top surface thereof serves as an upper opening 213. The interior space of the box portion 211 is configured to be able to store the thermal-storage solution layer 11, and the interior space is communicated with the external space via the upper opening 213. The cover portion 212 is provided so as to cover the upper opening 213 of the box portion 211, and is provided with a vent hole 214 communicated with the interior space of the box portion 211 at a part thereof. Therefore, the interior space of the thermal-storage container 21 is communicated with outside air via the vent hole 214 even in a state where the upper opening 213 of the box portion 211 is closed by the cover portion 212.

The box portion 211 and the cover portion 212 may be composed of a material and a shape that can stably hold the thermal-storage solution layer 11 in the interior space. The stainless steel (SUS) or a fiber-reinforced plastic (FRP) such as a PPS resin is commonly used as the material, while a rectangular or cubic shape is commonly exemplified as the shape. There is also no particular limitation on the internal volume of the box portion 211, and the box portion may be designed so as to obtain an appropriate volume according to use conditions of a thermal-storage device 20A.

The configuration of each layer to be formed in the thermal-storage container 21 will be specifically described with reference to Fig. 1. As mentioned above, the thermal-storage container 21 is provided therein with a thermal-storage solution layer 11 that stores a thermal-storage solution, and the evaporation prevention layer 13 formed on the upper portion of the thermal-storage solution layer by lamination, and also the air layer 12 may be formed above the layers by outside air that flows through vent hole 214 according to the application. Therefore, in the case of such application, the thermal-storage solution layer 11, the evaporation prevention layer 13 and the air layer 12 are formed inside the thermal-storage container 21 in this order from the lower side. There is no particular limitation on the thickness of each of the thermal-storage solution layer 11, the evaporation prevention layer 13 and the air layer 12, and an appropriate thickness may be set according to various conditions such as shape of the thermal-storage container 21, volume of the interior space, and volume increment of the thermal-storage solution due to thermal expansion. Namely, if a spacial margin (air layer 12) for preventing the thermal-storage solution from leaking out through the vent hole 214 due to thermal expansion is formed, each thickness of the thermal-storage solution layer 11 and the air layer 12 may have any value.

The vent hole 214, with which the cover portion 212 is provided, is configured to enable internal air forming the air layer 12 to flow out of the thermal-storage container 21, or to release steam or dissolved air generated from the thermal-storage solution to the outside in order to reduce an increase in pressure inside the thermal-storage container 21. The opening area may be optimized so as to suppress air constituting the air layer 12 from excessively flowing inside or outside the thermal-storage container 21, or to suppress the thermal-storage solution from decreasing as a result of excessive release of steam generated from thermal-storage container 21. There is no particular limitation on specific configurations such as position, shape and number of the vent hole 214, and the configuration may be the configuration that can realize reduction of an increase in pressure and suppression of a decrease in the thermal-storage solution. The vent hole 214 may be provided on the upper portion of the box portion 211, not the cover portion 212, or may be provided on the upper portion of both portions. It is possible to use, as a unit configured to adjust an internal pressure against an increase in pressure, a unit to be fit into the position that comes into contact with internal air in the cover portion 212, the unit being made of a rubber material having pinholes.

As shown in Fig. 1, a thermal-storage type heat exchanger 22 has a pipe-shaped configuration, provided so as to extend through inside the thermal-storage container 21, and is configured to enable a heating medium for heat exchange (referred to as a heat exchange medium for convenience) to flow therein. The position, at which the thermal-storage type heat exchanger 22 is provided, is the position inside the thermal-storage container 21, at which the heat exchanger is immersed in the thermal-storage solution layer 11.

An inlet 221 and an outlet 222 as both ends of the thermal-storage type heat exchanger 22 pass through the cover portion 212 and are exposed outside from the above the thermal-storage container 21, and an external pipe capable of enabling a heat exchange medium to flow is connected to these inlet 221 and outlet 222. Most of the body pipe portion 223 constituting most of the thermal-storage type heat exchanger 22 is formed in a zigzag-shape shape, and a body pipe portion 223 has a unicursal shape from the inlet 221 to the outlet 222. Most of this body pipe portion 223 is immersed in the thermal-storage solution layer 11. The heat exchange medium passes through the inside of the body pipe portion 223 from the inlet 221 toward the outlet 222, thereby performing heat exchange between the thermal-storage solution layer 11 and the heat exchange medium. There is no particular limitation on specific configuration or material of the thermal-storage type heat exchanger 22, and a known configuration can be preferably used.

There is no particular limitation on the method of thermal-storage and heat recovery by the thermal-storage type heat exchanger 22 and, for example, the following two types of methods can be used.

First, a first method is a method using the thermal-storage type heat exchanger 22 as a radiation source. Specifically, heat is stored in the thermal-storage solution layer 11 by releasing heat stored in the heat exchange medium into the thermal-storage solution layer 11 while passing through a high-temperature heat exchange medium (for example, warm water or a high-temperature refrigerant) in the body pipe portion 223. Not shown in Fig. 1, a heat exchanger is provided separately from the thermal-storage type heat exchanger 22, and heat is recovered from the thermal-storage solution layer 11 by passing through a low-temperature heat exchange medium (for example, cold water or a low-temperature refrigerant) in this heat exchanger. The configurations for thermal-storage and heat recovery can be reversed.

Next, a second method is a method in which heat supplier not shown in Fig. 1 (a heat exchanger other than the thermal-storage type heat exchanger 22, or a heat source) is also provided inside or outside the thermal-storage container 21. Specifically, heat is stored from the heat supplier to the thermal-storage solution layer 11 and a low-temperature heat exchange medium is passed through the inside of the thermal-storage type heat exchanger 22, thereby recovering heat from the thermal-storage solution layer 11 and transferring heat to a device using heat (not shown) connected to the outlet 222 of the thermal-storage type heat exchanger 22.

### [Composition of Evaporation Prevention Layer]

According to the invention, the evaporation prevention layer 13 is a layer composed of a composition in which a solvent composition has a melting point of lower than normal temperature (lower than ambient temperature) and a water-insoluble solvent contains at least any one of hydrocarbons having carbon atoms within a range from 24 to 44. The hydrocarbons constituting the water-insoluble solvent are chain or alicyclic saturated alkanes (or chain or alicyclic hydrocarbons that are almost saturated alkanes, hereinafter referred to as saturated alkanes). Specifically, poly-alpha olefin wax containing a component having carbon atoms within the above range, paraffin wax and mineral oil can be exemplified. Use of the evaporation prevention layer 13 with this composition made it possible to obtain an advantage capable of reducing corrosion of a thermal-storage type heat exchanger 22, and an advantage capable of further preventing or suppressing evaporation of a thermal-storage solution constituting the thermal-storage solution layer 11.

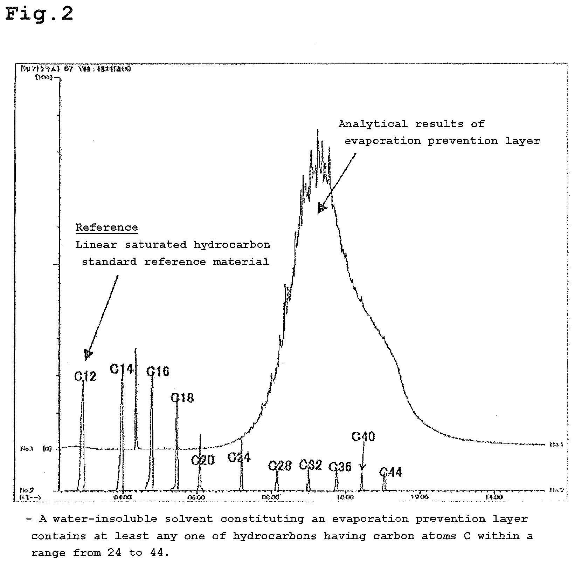

Fig. 2 shows analytical results of the composition of the examined evaporation prevention layer 13 obtained by a GC-MS analyzer using a water-insoluble solvent, and the composition is found to be a composition containing at least any one (at least one) of hydrocarbons having carbon atoms within a range from 24 to 44.

A carbon structure of this water-insoluble solvent will be described. Generally speaking, saturated alkanes (also referred to as saturated hydrocarbon) are in the form of a gas at normal temperature in the case of having 4 or less carbon atoms, a liquid at normal temperature in the case of having about 5 to 18 carbon atoms, or a solid at normal temperature in the case of having more than about 18 carbon atoms. Regularity of this general rule is established for saturated alkanes having a linear structure that is composed of linearly arranged carbon atoms and is free from branching. Branched saturated alkanes are in a liquid form at normal temperature even in the case of having more than about 18 carbon atoms. According to the invention, when α-olefin having 8 to 10 carbon atoms (an unsaturated alkene having a structure that has a double bond at the end and has a single bond at other moieties) is subjected to a hydrogenation treatment after a polymerization reaction, saturated alkanes containing at least any one of hydrocarbons having carbon atoms within a range from 24 to 44 are formed. Moreover, the saturated alkanes have been converted into saturated alkanes having a large amount of branching by devising the polymerization reaction, and thus the saturated alkanes are in a liquid form at normal temperature. Synthetic oil or semi-synthetic oil and mineral oil to be used in the present embodiment are used after mixing with 85 or more and little less than 100% (% by weight) of a water-insoluble solvent obtained by using this production process.

It is difficult for the hydrocarbon having carbon atoms within the above number range to control the number of carbon atoms by current technology, and thus the number of carbon atoms is often controlled by letting things take their course. Therefore, a hydrocarbon having less than 24 carbon atoms is likely to form saturated alkanes having a linear structure, leading to a problem that a liquid having high volatility is formed and is immediately evaporated, resulting in short lifetime. To the contrary, a hydrocarbon having 45 or more carbon atoms is likely to turn into a solid form at normal temperature, leading to a problem that it is hard to handle. As mentioned above, because of long lifetime due to less evaporation, liquid form at normal temperature and easy handling, a composition containing at least any one of hydrocarbons having carbon atoms within a range from 24 to 44 was used as a water-insoluble solvent. Namely, it is possible to stably use the evaporation prevention layer 13 over longer period. In addition, this water-insoluble solvent is less likely to form an organic acid and exhibits high air tightness, and thus having an advantage that evaporation of the thermal-storage solution is prevented or suppressed, and oxygen in air is less likely to penetrate into the thermal-storage solution.

### [Effect Verification of Corrosion Reduction Effect of Evaporation Prevention Layer]

The effect verification method and the results thereof will be specifically described by way of Examples. A thermal-storage device 20A used in the effect verification will be specifically described by way of Examples. A PPS resin (polyphenylene sulfide resin) was formed as a thermal-storage container 21 to obtain a box portion 211 and a cover portion 212. A thermal-storage type heat exchanger 22 composed of a copper coil was immersed in the interior space of the box portion 211 and then a thermal-storage solution, prepared by preliminarily mixing deionized water with a very small amount of an alkali thereby adjusting to initial pH 7.0, was injected into the interior space to form a thermal-storage solution layer 11. Then, an evaporation prevention layer 13 was laminated on the upper portion thereof and the cover portion 212 was laminated on the box portion 21, and thus completing the thermal-storage device 20A.

Various evaluations in Examples and Comparative Examples were performed by the following manners. In an effect confirmation test, each of various evaporation prevention layers 13 was laminated on a thermal-storage solution with the initial pH 7.0 and the test was performed under predetermined conditions (at 20°C for 2 weeks, then at 100°C for 2 weeks). Then, characteristics before and after the test were evaluated. The evaluated characteristics are the evaporation prevention effect of the thermal-storage solution, and the pH of the thermal-storage solution before the test (initial) and after the test. The test results are evaluated by four criteria of "Excellent", "Satisfactory", "Insufficient" and "Very poor" based on the measurement values of characteristics, and each is indicated by the following symbols "A" "B" "C" and "D".

The evaporation prevention effect of the thermal-storage solution is evaluated by the value obtained by dividing each weight loss of a thermal-storage solution layer 11 and an evaporation prevention layer 13 under predetermined conditions by a product of a unit area of the evaporation prevention layer 13 and a test period. As this value becomes larger, each weight of the thermal-storage solution layer 11 and the evaporation prevention layer 13 significantly decreases. Therefore, the large value means that the evaporation prevention effect of the thermal-storage solution is not exerted. To the contrary, as this value becomes smaller, each weight of the thermal-storage solution layer 11 and the evaporation prevention layer 13 scarcely decreases. Therefore, the small value means that excellent evaporation prevention effect of the thermal-storage solution is exerted. Weight loss at 20°C of less than 3 mg/cm² ·day was rated "A", weight loss at 20°C of 3 to 6 mg/cm² ·day was rated "B", weight loss at 20°C of more than 6 mg/cm² ·day and 10 mg/cm² ·day or less was rated "C", and weight loss at 20°C of more than 10 mg/cm² ·day was rated "D". Weight loss at 100°C of less than 0.1 g/cm² ·day was rated "A", weight loss at 100°C of 0.1 to 0.2 g/cm² ·day was rated "B", weight loss at 100°C of more than 0.2 g/cm² ·day and 0.3 g/cm² ·day or less was rated "C", and weight loss at 100°C of more than 0.3 g/cm² ·day was rated "D".

The pH of the solution is determined by measuring the humoral pH of a thermal-storage solution before the test (initial) and after the test. The suppression effect of an organic acid is the item to be evaluated by confirming the pH decrease that occurs depending on the amount of an organic acid formed from an evaporation prevention layer 13. As the amount of the organic acid formed becomes larger, the pH tends to decrease and shift to the acidic side. In this test, this tendency is used. Since the pH before the test (initial) is identical to 7.0, evaluation is performed by the pH after the test. That is, the pH of 6.5 to 7.0 was rated "A", the pH of 6.0 or higher and lower than 6.5 was rated "B", the pH of 5.5 or higher and lower than 6.0 was rated "C", and the pH of lower than 5.5 was rated "D".

In comprehensive judgment, the respective evaluation items of the evaporation prevention effect of a thermal-storage solution and the suppression effect of an organic acid were comprehensively evaluated. If all evaluation items are rated "A" without including "B", "C" or "D", rating "A" was awarded in the comprehensive judgment. If evaluation items are rated "B" or "A" without including "C" or "D", rating "B" was awarded in the comprehensive judgment. If any one of evaluation items is rated "C", rating "C" was awarded in the comprehensive judgment even if including "A" and "B". If any one of evaluation items is rated "D", rating "D" was awarded in the comprehensive judgment even if including "A", "B" or "C".

The evaporation prevention layer 13 used in the examination is as follows.

### (Example A of the Present Invention)

The evaporation prevention layer 13 is Example using a composition in which a solvent composition has a melting point of lower than normal temperature and a water-insoluble solvent contains at least one of hydrocarbons having carbon atoms within a range from 24 to 44. The evaporation prevention layer 13 is composed of a composition having a pour point of -31°C and a decomposition initiation temperature of 260°C. Fig. 2 shows analytical results of the water-insoluble solvent of this composition obtained by a GC-MS analyzer. A thermal-storage solution using deionized water with the initial pH of 7.0 was injected into a thermal-storage container and the evaporation prevention layer 13 was laminated on the upper portion thereof, and then a test was performed under predetermined conditions and characteristics were evaluated. The summarized results are shown in Table 1.

### (Conventional Example A)

In the same manner as in Example A, except that a C₁₅H₃₂ saturated hydrocarbon was used as the evaporation prevention layer 13, each evaluation was performed. The results are shown in Table 1. This evaporation prevention layer 13 is composed of a composition having a melting point of 10°C and a boiling point of 270°C.

### (Conventional Example B)

In the same manner as in Example A, except that silicone oil was used as the evaporation prevention layer 13, each evaluation was performed. The results are shown in Table 1. This evaporation prevention layer 13 is composed of a composition having a pour point of -40°C and a decomposition initiation temperature of 250°C.

### (Conventional Example C)

In the same manner as in Example A, except that fats and oils (fatty acid ester) were used as the material of the evaporation prevention layer 13, each evaluation was performed. The results are shown in Table 1. This evaporation prevention layer 13 is composed of a composition having a pour point of -20°C and a decomposition initiation temperature of 200°C.

### (Comparative Example I)

In the same manner as in Example A, except that a C₂₃H₄₈ saturated hydrocarbon was used as the material of the evaporation prevention layer 13, each evaluation was performed. The results are shown in Table 1. This evaporation prevention layer 13 is composed of a composition having a melting point of 46°C and a boiling point of 200°C.

### (Comparative Example II)

In the same manner as in Example A, except that a C₁₀₀₀ ethylene resin was used as the material of the evaporation prevention layer 13, each evaluation was performed. The results are shown in Table 1. This evaporation prevention layer 13 is composed of a polymer resin having a melting point of 80°C and a decomposition initiation temperature of 160°C. Sine a C45 hydrocarbon cannot be obtained by current technology, the polymer resin was used as a substitute for the C45 hydrocarbon in the evaluation.

### (Evaluation Results of the Present Invention)

Each of various evaporation prevention layers 13 was laminated on a thermal-storage solution using deionized water with the initial pH 7.0 and then a test was performed under predetermined conditions (at 20°C for 2 weeks, then at 100°C for 2 weeks). The results are summarized in Table 1.

**Table 1**

| Division | | | Present Invention A | Conventional Example A | Conventional Example B | Conventional Example C | Comparative Example I | Comparative Example II |
|---|---|---|---|---|---|---|---|---|
| Type of hydrocarbon (expressed by the number of carbon atoms C) | | | C24-C44 hydrocarbon | C15 saturated hydrocarbon | Silicone oil | Fats and Oils (Fatty acid ester) | C23 hydrocarbon | C1000 ethylene resin |
| Physical properties | Power point/Melting point (°C) | | -31°C (Power point) | 10°C (Melting point) | -40°C (Power point) | -20°C (Power point) | 46°C (Melting point) | 80°C (Melting point) |
| | Decomposition initiation temperature/Boiling point (°C) | | 260°C (Decomposition initiation temperature) | 270°C (Boiling point) | 250°C (Decomposition initiation temperature) | 200°C (Decomposition initiation temperature) | 200°C (Boiling point) | 160°C (Decomposition initiation temperature) |
| Evaporation prevention effect of solution | | 20°C | A | C | B | B | D | D |
| | | 100°C | A | D | C | D | C | D |
| Solution pH | | Before test | 7.0 | 7.0 | 7.0 | 7.0 | 7.0 | 7.0 |
| | | After test | 6.9 | - | 6.4 | 5.4 | 6.9 | 7.0 |
| | Suppression effect of organic acid | | A | - | B | D | A | A |
| Comprehensive judgment | | | A | D | C | D | D | D |

| | | | | | | | | |
|---|---|---|---|---|---|---|---|---|
| A: Excellent B: Satisfactory C: Insufficient D: Very Poor | | | | | | | | |

In Example A of the present invention, both the evaporation prevention effect of a thermal-storage solution and the suppression effect of an organic acid are excellent because of using, as the material of the evaporation prevention layer 13, a composition in which a solvent composition has a melting point of lower than normal temperature and a water-insoluble solvent contains at least any one of hydrocarbons having carbon atoms within a range from 24 to 44.

To the contrary, in Conventional Examples A to C, both the evaporation prevention effect of a thermal-storage solution and the suppression effect of an organic acid were insufficient. Particularly, in Conventional Example A, there arose a problem that all of a thermal-storage solution layer and an evaporation prevention layer are entirely evaporated when a test was performed under predetermined conditions (at 20°C for 2 weeks, then at 100°C for 2 weeks). In Comparative Examples I and II, both the evaporation prevention effect of a thermal-storage solution and the suppression effect of an organic acid were insufficient.

A description will be made on the reason why the water-insoluble solvent used as the material of the evaporation prevention layer 13 in Example A of the present invention thermal-storage type heat exchanger 22 can further reduce corrosion. As mentioned below, copper used in the thermal-storage type heat exchanger 22 undergoes corrosion and cause elution of lots of copper ions as the pH of the aqueous solution shifts to the more acidic side. Therefore, it is desired that the water-insoluble solvent used in the evaporation prevention layer 13 is a material that is less likely to form an organic acid. The organic acid has a property of being formed in a large amount from α-olefin, while being formed in a small amount from saturated alkanes. As for a water-insoluble solvent of this composition used in the evaporation prevention layer 13, it may be saturated alkanes (or hydrocarbons that are almost saturated alkanes), and thus forming a small amount of an organic acid and enabling the pH of the thermal-storage solution to be less likely to shift to the acidic side.

Copper used in the thermal-storage type heat exchanger 22 undergoes corrosion and cause elution of lots of copper ions as dissolved oxygen increases due to penetration of oxygen in air into the thermal-storage solution. Therefore, it is desired that the water-insoluble solvent used in the evaporation prevention layer 13 is a material in which oxygen in air is less likely to penetrate into the thermal-storage solution, and oxygen in air as a property of being less likely to penetrate into the thermal-storage solution in the case of sufficient airtight sealing. As for the water-insoluble solvent used in the evaporation prevention layer 13, it is a liquid at normal temperature, leading to sufficient airtight sealing, and thus oxygen in air is less likely to penetrate into the thermal-storage solution. From such a point of view, this water-insoluble solvent has an advantage capable of further reducing corrosion of the thermal-storage type heat exchanger 22.

The solvent composition may contain, in addition to the water-insoluble solvent, known other components. Specifically, antioxidants, corrosion inhibitors, anti-rust agents and defoamers can be exemplified. There is also no particular limitation on addition amount and addition method of these additives, and amount in a known range or technique can be used. There is no particular limitation on specific composition of the solvent composition. In the present embodiment, as mentioned above, it is possible to preferably exemplify a configuration in which the amount of at least one water-insoluble solvent is within a range of 85 or more and little less than 100% (% by weight), balance being composed of a mixture containing additives (within a range of little less than 15% by weight) . Needless to say, the composition can be appropriately designed according to various conditions such as performances required to the evaporation prevention layer 13, and operating environment of the thermal-storage device 20A.

There is no particular limitation on temperature conditions of the solvent composition, and the solvent composition is preferably a liquid within a range of normal temperature (5 to 35°C) and, therefore, the pour point is preferably lower than normal temperature (lower than ambient temperature). As mentioned below, the pour point of the solvent composition is preferably lower than a solidifying point of the thermal-storage solution. Even if the temperature of the thermal-storage device 20A decreases until the thermal-storage solution is solidified, the solvent composition can retain fluidity, and thus enabling effective realization of evaporation prevention function even in a state of low temperature. Even if the thermal-storage solution is solidified, the solvent composition is not yet solidified, and thus making it possible to reduce volume expansion caused by solidification of the thermal-storage solution, and to still further ensure the pressure relaxation function. In particular, the solvent composition containing a hydrocarbon having carbon atoms within a range from 24 to 44 provides an advantage capable of more satisfactorily maintaining fluidity at low temperature of the evaporation prevention layer 13.

As mentioned above, formation of the evaporation prevention layer 13 in the thermal-storage container 21 enables an improvement in the evaporation prevention function of the thermal-storage solution layer 11. Therefore, the thermal-storage solution can be stably stored in the thermal-storage container 21, and thus a thermal-storage device 20A having excellent handling properties can be obtained. In addition, evaporation of the thermal-storage solution layer 11 is suppressed by the evaporation prevention layer 13, and thus making it possible to maintain satisfactory thermal-storage characteristics over the long period without requiring replenishment. Furthermore, an organic acid is formed in a small amount from the water-insoluble solvent of this composition and also oxygen in air is less likely to penetrate into a thermal-storage solution. This ensures reduction in corrosion of the heat exchanger 22 over the long period.

The evaporation prevention layer 13 is a layer that prevents or suppresses evaporation of the thermal-storage solution constituting the thermal-storage solution layer 11 (layer that realizes the evaporation prevention function) and it is possible to use various oils that are in the form of liquid at normal temperature (organic solvents composed of a solvent composition of at least one water-insoluble solvent). It is possible to preferably use, as an example of the material of the evaporation prevention layer 13, a solvent composition in which a water-insoluble solvent accounts for 85 or more and little less than 100% (% by weight), balance being composed of a mixture of additives such as an antioxidant. Not showing in Fig. 1, the evaporation prevention layer 13 may be a plurality of layers. When two or more evaporation prevention layers 13 are formed, each evaporation prevention layer 13 may be composed of a solvent composition having a different composition and may be independently formed without being mixed with each other, or may be composed so that evaporation prevention layers 13 are mixed with each other. The water-insoluble solvent used in this solvent composition is a non-polar solvent that does not substantially have polarity, or a low polar solvent having a low polarity that enables formation of a single layer isolated from an aqueous layer without being substantially mixed with water at normal temperature, and the solvent may be in a liquid form at least within a range of normal temperature.

### [Relation between Water Quality pH and Concentration of Eluted Copper Ions]

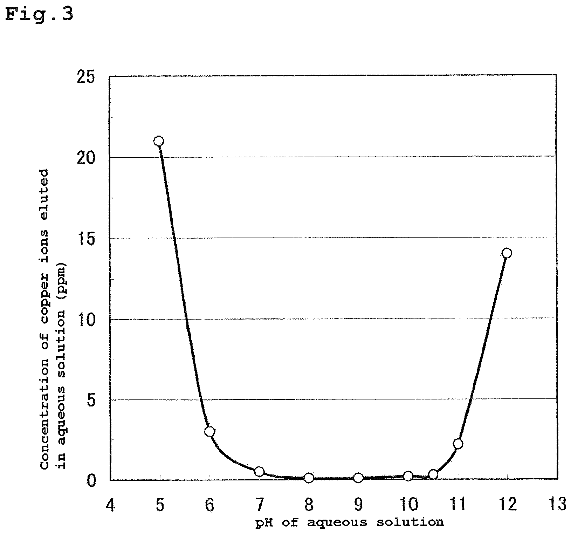

In order to clarify the corrosion reduction effect of evaporation prevention layer 13, a copper tube was tested at 100°C for 2 weeks by immersing in aqueous solutions each having a different pH (oxygen is dissolved in water), and then the concentration of eluted copper ions was measured. Fig. 3 is an effect characteristic graph showing a relation between the pH and the concentration of eluted copper ions. It is found that the concentration of eluted copper ions is low in the pH range of 6 to 11 (preferably pH is from 7 to 10.5), and quickly increases in the acidic range of pH 6 or lower and the alkaline range of pH 11 or higher. This reason will be described. Copper undergoes corrosion due to galvanization with oxygen dissolved in water (referred to as dissolved oxygen) and cause elution of copper ions. Since a passive state is formed by dissolved oxygen in the neutral to weak alkaline range such as pH range of 6 to 11 (preferably pH is from 7 to 10.5), corrosion resistance is improved and thus copper ions are slightly eluted. However, passive dissolution of copper oxide occurs in the acidic range of pH 6 or lower and thus numerous copper ions Cu²⁺ are eluted. In the alkaline range of pH 11 or higher, passive dissolution of copper oxide occurs and thus numerous copper ions CuO₂²⁻ or HCuO₂⁻ are eluted.

As shown in the above-mentioned Fig. 3, copper used in the thermal-storage type heat exchanger 22 undergoes corrosion to cause elution of copper ions in an aqueous solution containing oxygen dissolved in water as the pH of the aqueous solution shifts to the more acidic side. Therefore, it is desired that the water-insoluble solvent used in the evaporation prevention layer 13 is a material that is less likely to form an organic acid, and is also less likely to cause penetration of oxygen. Generally speaking, the organic acid has a property of being formed in a large amount from α-olefin, while being formed in a small amount from saturated alkanes, or hydrocarbons that are almost saturated alkanes. Oxygen has a property of being less likely to be penetrated with saturated alkanes, or hydrocarbons that are almost saturated alkanes.

The materials of the evaporation prevention layer 13 using a "composition, in which a water-insoluble solvent contains at least one of hydrocarbons having carbon atoms within a range from 24 to 44" as Example A of the present invention are saturated alkanes, or hydrocarbons that are almost saturated alkanes. Therefore, an organic acid is formed in a small amount, and thus the pH of the thermal-storage solution is less likely to shift to the acidic side, and also oxygen in air is less likely to penetrate into the thermal-storage solution. Due to this effect, corrosion of the thermal-storage type heat exchanger 22 was significantly reduced. As for a conventional evaporation prevention layer containing a large amount of α-olefin, an organic acid is formed in a large amount and thus the pH of the thermal-storage solution significantly shifts to the acidic side, and also oxygen in air penetrates into the thermal-storage solution. Due to this effect, the thermal-storage type heat exchanger 22 underwent significant corrosion.

### [Device to maintain pH of Thermal-Storage Solution at 6 to 11]

As is apparent from Fig. 3, since copper ions are slightly eluted in the water quality at a pH range of 6 to 11 (preferably a pH range of 7 to 10.5), it is desired to use, as the thermal-storage solution 11, a solution with water quality at an initial pH range of 6 to 11. The evaporation prevention layer 13 using a composition containing, as the water-insoluble solvent, at least any one of hydrocarbons having carbon atoms within a range from 24 to 44 exerts less influence on the water quality pH of the thermal-storage solution layer 11 since an organic acid is formed in a small amount. Therefore, when using, as the thermal-storage solution layer 11, a solution with water quality at an initial pH range of 6 to 11, it is possible sufficiently ensure corrosion resistance of the thermal-storage type heat exchanger 22. However, the thermal-storage solution layer 11 cannot help using city water of pH 6 to 5 in rare cases. When the thermal-storage solution layer 11 containing a dihydric alcohol as an anti-freeze agent (coolant) is used over the long term, an organic acid is formed in a large amount and thus the pH shifts to the acidic side.

Thus, in order to form a thermal-storage solution layer 11 at a pH range of 6 to 11 that causes slight elution of copper ions, it was decided to immerse a slightly soluble basic substance containing, as a main component, at least one of magnesium oxide, magnesium hydroxide, magnesium carbonate, magnesium silicate and metal magnesium in the thermal-storage solution layer 11. These magnesium-based slightly soluble basic substances have a property in which the pH increases to about 10.5 when immersed in the aqueous solution, and also a property that pH decrease is prevented by capturing an organic acid that causes pH descrease. Therefore, the pH of the thermal-storage solution, in which these slightly soluble basic substances have been immersed, does not increase to 11 or higher and, when the slightly soluble basic substance is immersed in the amount required for neutralization by preliminarily estimating the amount of an organic acid to be formed, the pH does not decrease to lower than 6.

As used herein, the term "slightly soluble" of "slightly soluble basic substance" refers to a "property in which a substance initially exists in a solid form, while a part thereof is dissolved very slightly when immersed in an aqueous solution containing a thermal-storage solution". In many cases, dissolution of the slightly soluble basic substance has been performed continuously during use over the long period, for example, 30 years. When the slightly soluble basic substance is used over the long period, the entire substance may be sometimes dissolved in the aqueous solution containing a thermal-storage solution, and thus finally causing disappearance.

Among magnesium-based slightly soluble basic substances, magnesium oxide, magnesium hydroxide and metal magnesium are excellent in view of long lifetime. In particular, magnesium oxide had such an advantage that it is easy to handle because of forming into a granular shape through firing, and it can be used with a sense of security because of free from generation of a gas such as hydrogen. Thus, a material containing magnesium oxide as a main component was studied in detail.

Magnesium oxide has excellent neutralization characteristics as a slightly soluble basic substance, but has a problem that it absorbs dissolved carbon dioxide to form basic magnesium carbonate when immersed in water over the long period, leading to decreased neutralizing capacity and also slightly decreased lifetime. To prevent the problem, an attempt was made to mix magnesium oxide with a small amount of a secondary component. As a result, when the concentration of magnesium oxide is set to 70% or more, and preferably 85% or more, and balance is composed of various metal oxides (for example, metal oxides other than magnesium oxide, such as silicic acid, aluminum oxide, iron oxide, calcium oxide and boric acid), satisfactory long lifetime could be obtained. The reason is considered as follows. That is, when magnesium oxide is mixed with these metal oxides to form a mixture, a melting point decreases and firing can be performed at low temperature, and thus a stables oxide is obtained by the crystal growth to cause significant decrease in absorbability of dissolved carbon dioxide. As a result, a basic magnesium carbonate becomes less likely to be formed. Simultaneously, a composition containing a composite of magnesium oxide and various metal oxides as a main component also has such an advantage that it is easy to handle because of forming into a granular shape, and it is satisfactorily dissolved, and thus the humoral pH could be adjusted within a range from neutrality to weak alkalinity. A specific composition, in which satisfactory results were obtained, among these compositions will be described below.

The composition (1) is a composition obtained by mixing with 3 to 0.05% (% by weight, the same shall apply hereinafter), and preferably 1 to 0.1% of silicic acid (SiO₂), balance being magnesium oxide. The composition (2) is a composition obtained by mixing 2 to 0.01%, and preferably 1 to 0.03% of aluminum oxide (Al₂O₃), balance being magnesium oxide. The composition (3) is a composition obtained by mixing 3 to 0.05% of silicic acid (SiO₂) and 2 to 0.01% of aluminum oxide, balance being magnesium oxide. The composition (4) is a composition obtained by mixing 7 to 0.01%, and preferably 1 to 0.02% of iron oxide (Fe₂O₃), balance being magnesium oxide. The composition (5) is a composition obtained by mixing 3 to 0.05% of silicic acid (SiO₂), 2 to 0.01% of aluminum oxide and 7 to 0.01% of iron oxide (Fe₂O₃), balance being magnesium oxide. The composition (6) is a composition obtained by mixing 15 to 0.1%, and preferably 3 to 0.1% of calcium oxide (CaO), balance being magnesium oxide. The composition (7) is a composition obtained by mixing 3 to 0.05% of silicic acid (SiO₂), 2 to 0.01% of aluminum oxide, 7 to 0.01% of iron oxide (Fe₂O₃) and 15 to 0.1% of calcium oxide (CaO), balance being magnesium oxide. In addition, there may be a composition obtained by mixing 3 to 0.01%, and preferably 1 to 0.02% of boron oxide (B₂O₃), balance being magnesium oxide, and a composition obtained by further mixing boron oxide with the metal oxides of the above-mentioned compositions (1) to (7), balance being magnesium oxide.

Magnesium oxide is commonly produced by firing raw materials of magnesium hydroxide or magnesium carbonate. Thus, a study was made on a firing temperature of raw materials with respect to compositions (1) to (7) each containing the above-mentioned magnesium oxide as a main component. As a result, it has been found that the following advantages are obtained by firing at 1,500 to 2,300°C. That is, a basic magnesium carbonate is less likely to be formed due to significant decrease in absorbability of carbon dioxide, and it is easy to handle because of forming into a granular shape, and also the thus formed organic acid is captured after moderate dissolution, and thus the humoral pH could be adjusted within a range from neutrality to weak alkalinity. In particular, the product obtained by firing at 1,600 to 2,100°C was significantly satisfactory. The reason is considered as follows. That is, while magnesium oxide is a material having a melting point of 2,800°C, these metal oxides are materials each having a melting point of about 1,700 to 2,600°C, and thus magnesium oxide obtained by mixing these metal oxides can be fired at 1,500 to 2,300°C because of a decrease in a melting point. As a result, such magnesium oxide fired at low temperature becomes a stable oxide due to the crystal growth. To the contrary, magnesium oxide fired at a temperature higher than 2,300°C had a problem that it becomes an oxide having a crystal structure, that is slightly different from an original crystal structure, due to a peroxidation state, and also it becomes less likely to be dissolved, and thus causing deterioration of characteristics of adjusting the humoral pH within a range from neutrality to weak alkalinity by capturing the thus formed organic acid. Magnesium oxide fired at a temperature lower than 1,500°C had a problem that a basic magnesium carbonate is likely to be formed due to absorbability of the dissolved carbon dioxide, and it is inconvenient to handle since it is less likely to be formed into a granular shape.

A particle diameter of magnesium oxide was studied. As a result, it has been found that magnesium oxide obtained by firing the above-mentioned compositions (1) to (7) at 1,500 to 2,300°C and crushing into powders having a particle diameter of 1 to 15 mm, and preferably 2 to 12 mm has an advantage that the humoral pH is adjusted within a range from neutrality to weak alkalinity by capturing the thus formed organic acid after moderate dissolution. The reason is as follows. That is, the particle diameter of more than 15 mm causes a problem that it becomes less likely to be dissolved, leading to deterioration of characteristics of adjusting the humoral pH within a range from neutrality to weak alkalinity by capturing the thus formed organic acid. To the contrary, the particle diameter of less than 1 mm causes a problem that it is inconvenient to handle because of forming into a powder shape.

Thus, a composition (having a particle diameter of 3 to 10 mm) containing 98.70 to 99.10% of MgO, 0.60 to 0.90% of CaO, 0.15 to 0.20% of SiO₂, 0.05 to 0.10% of Fe₂O₃, 0.05 to 0.10% of Al₂O₃, and 0.02 to 0.05% of B₂O₃ was used as a material containing magnesium oxide a main component, and an effect confirmation test was performed using the product fired at 1,800°C and the product fired at 2,000°C.

This effect confirmation test was performed with respect to (1) a thermal-storage solution using city water with initial pH of 5.2, and (2) a thermal-storage solution using an aqueous ethylene glycol solution with pH 5 adjusted by mixing formic acid or glycolic acid. The thermal-storage solution (2) is a thermal-storage solution composed of a base solution prepared by mixing about 70% of deionized water with 30% of ethylene glycol as a dihydric alcohol and a trace amount of an addition solution, the value of the pH of the thermal-storage solution being preliminarily adjusting to 5 by mixing formic acid or glycolic acid formed by using the base solution over the long term.

The above-mentioned magnesium oxide-based slightly soluble basic substance and a copper tube of a thermal-storage type heat exchanger 22 were immersed in each thermal-storage solution and the test was performed at 100°C for a month, and then characteristics were evaluated. The thermal-storage solution containing a magnesium-based slightly soluble basic substance immersed therein has satisfactory pH control effect since the pH became 7 to 9 after the test. Thus, copper constituting the thermal-storage type heat exchanger 22 exhibits satisfactorily corrosion resistance. Regarding the thermal-storage solution using no slightly soluble basic substance, the pH maintains 5 after the test, and thus copper constituting the thermal-storage type heat exchanger 22 exhibits very poor corrosion resistance. [Composition of Thermal-Storage Solution]

The thermal-storage solution constituting the thermal-storage solution layer 11 may be a thermal-storage medium composed of at least water (comprising at least water). The thermal-storage solution may be composed only of water, or may contain various additives that are soluble or dispersible in water. In the present embodiment, it is particularly preferred that the thermal-storage solution contains a dihydric alcohol as an anti-freeze agent (coolant). When the thermal-storage solution is an aqueous solution containing a dihydric alcohol, freezing of the thermal-storage solution can be avoided even at a freezing point (0°C at normal temperature under normal pressure) or lower.

Examples of the dihydric alcohol include, but are not limited to, ethylene glycol, propylene glycol, diethylene glycol, butanediol, neopentyl glycol, 3-methylpentadiol, 1,4-hexanediol, and 1,6-hexanediol. Among these dihydric alcohols, ethylene glycol or propylene glycol is preferably used in view of costs and from a viewpoint of using successfully as an anti-freeze agent. These dihydric alcohols may be used alone, or two or more dihydric alcohols may be used in combination. The anti-freeze agent is not limited to the dihydric alcohol, and may be a compound or composition other than the dihydric alcohol.

When a thermal-storage solution mixed with zero-point several % of an antioxidant (for example, sodium nitrite) for preventing oxidation of this dihydric alcohol is replaced by the thermal-storage solution which is an aqueous solution containing a dihydric alcohol, the amount of an organic acid formed is further reduced, and thus making it possible to still more ensure corrosion resistance of a heat exchanger. Even if using, as the antioxidant, vitamin C (ascorbic acid), vitamin E (tocopherol), dibutylhydroxytoluene (BHT), butylhydroxyanisole (BHA), sodium erythorbate, a coffee bean extract (chlorogenic acid), a green tea extract (catechin), or a rosemary extract, similar effect can be obtained, and there is no particular limitation on specific type or amount.

There is also no particular limitation on specific type of the additive to be added to the thermal-storage solution, and it is possible to use, in addition to anti-freeze agents such as the dihydric alcohol, various additives known in the field of the thermal-storage material composition, such as pH adjustors, supercooling inhibitors, thickeners, heat transfer accelerators, moisture evaporation inhibitors, corrosion inhibitors, anti-rust agents (when the thermal-storage container 21 is made of metal) . There is also no particular limitation on addition amount and addition method of these additives, and amount in a known range or technique can be used.

The composition of the thermal-storage solution constituting the thermal-storage solution layer 11 used in the above-mentioned effect confirmation test will be described. The thermal-storage solution with the concentration of 30% ethylene glycol has characteristics in which a boiling point is 103°C and a freezing temperature (i.e., pour point) is -15°C. Examples of the addition solution to be added in a trace amount include azoles (for example, benzotriazole, mercaptobenzotriazole, tolyltriazole, etc.) as anti-rust agents of copper, anti-mold agents (for example, sodium benzoate, etc.), and antioxidants (for example, sodium nitrite, etc.) for preventing ethylene glycol.

These effect confirmation tests were also performed with respect to (3) a mixed solution (having a boiling point of 130°C and a freezing temperature of -43°C) of 85% of ethylene glycol and 15% of water, (4) a mixed solution (having a boiling point of 120°C and a freezing temperature of -53°C) of 85% of propylene glycol and 15% of water, and (5) a mixed solution (having a boiling point of 102°C and a freezing temperature of -15°C) of 30% of propylene glycol and 70% of water. The thermal-storage solution containing a magnesium-based slightly soluble basic substance immersed therein has satisfactory pH control effect since the pH became 7 to 9 after the test, and thus copper constituting the thermal-storage type heat exchanger 22 exhibited satisfactorily corrosion resistance.

In such effect confirmation test, when using a thermal-storage solution prepared by mixing a dihydric alcohol such as ethylene glycol or propylene glycol with an antioxidant for preventing oxidation of the dihydric alcohol (for example, sodium nitrite), an advantage capable of reducing the amount of an organic acid was obtained, and also satisfactory corrosion resistance of a heat exchanger (made of copper) was obtained.

While the present invention has been specifically described by way of Examples and Comparative Examples, the present invention is not limited thereto. Various modifications, alterations and variations can be made by persons skilled in the art without departing from the spirit or scope of the present invention.

### (Second Embodiment)

In the second embodiment, an evaporation prevention layer 13 contains an organic compound that is insoluble in a thermal-storage solution and has a specific gravity lower than that of water, and also has a melting point of normal temperature or higher.

Similar to the evaporation prevention layer 13 of the first embodiment, the evaporation prevention layer 13 of the present embodiment can be used more stably over longer period. Thus, it is possible to provide a thermal-storage device that can stably store a thermal-storage solution in a thermal-storage container and is also excellent in handling properties, and an air conditioner provided with the same.

### [Configuration of Thermal-Storage Device]

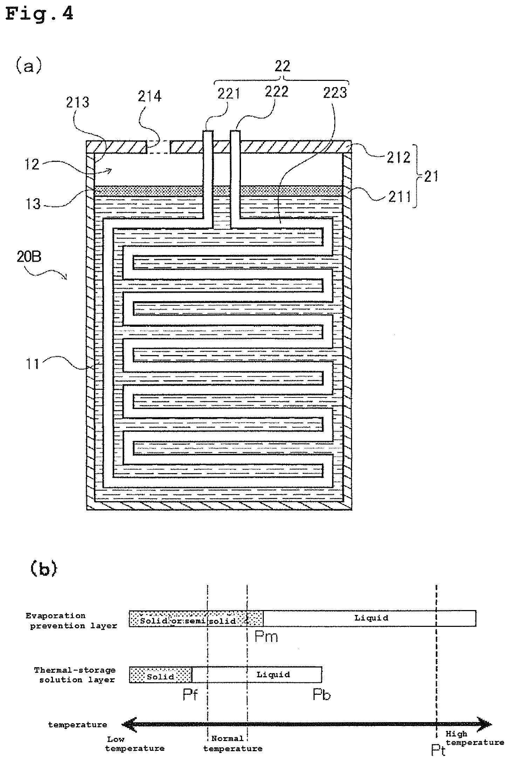

First, a specific configuration of a thermal-storage device 20B of the present second embodiment will be specifically described with reference to Fig. 4(a).

With respect to the portion that overlaps with the first embodiment, a description was omitted as much as possible. Therefore, each component of the thermal-storage device 20B may have the same configuration as that of the thermal-storage device 20A unless otherwise specifically described.

As shown in Fig. 4(a), the thermal-storage device according to the present embodiment 20B includes a thermal-storage container 21 and a thermal-storage type heat exchanger 22 similar to the thermal-storage device 20A according to the first embodiment, and a sensible thermal-storage solution is stored in the thermal-storage container 21, thereby to form a thermal-storage solution layer 11, and to form an evaporation prevention layer 13 (main evaporation prevention layer 13) and an air layer 12 above the thermal-storage solution layer 11.

The thermal-storage solution constituting the thermal-storage solution layer 11 is that in which a thermal-storage system employs sensible heat, and may be a thermal-storage medium composed of at least water (comprising at least water) . The thermal-storage solution may be composed only of water, and may contain various additives, or may contain various additives that are soluble or dispersible in water. In the present embodiment, it is particularly preferred that the thermal-storage solution contains a dihydric alcohol as an anti-freeze agent (coolant). When the thermal-storage solution is an aqueous solution containing a dihydric alcohol, freezing of the thermal-storage solution can be avoided even at a freezing point (0°C at normal temperature under normal pressure) or lower.

Examples of the dihydric alcohol include, but are not limited to, ethylene glycol, propylene glycol, diethylene glycol, butanediol, neopentyl glycol, 3-methylpentadiol, 1,4-hexanediol, and 1,6-hexanediol. Among these dihydric alcohols, ethylene glycol or propylene glycol is preferably used in view of costs and from a viewpoint of using successfully as an anti-freeze agent. These dihydric alcohols may be used alone, or two or more dihydric alcohols may be used in combination. The anti-freeze agent is not limited to the dihydric alcohol, and may be a compound or composition other than the dihydric alcohol.

There is also no particular limitation on specific type of the additive to be added to the thermal-storage solution, and it is possible to use, in addition to anti-freeze agents such as the dihydric alcohol, various additives known in the field of the thermal-storage material composition, such as supercooling inhibitors, thickeners, heat transfer accelerators, moisture evaporation inhibitors, corrosion inhibitors, anti-rust agents (when the thermal-storage container 21 is made of metal) . There is also no particular limitation on addition amount and addition method of these additives, and amount in a known range or technique can be used.

The evaporation prevention layer 13 is laminated on the thermal-storage solution layer 11, and prevents or suppresses evaporation of the thermal-storage solution. An evaporation prevention composition constituting this evaporation prevention layer 13 is composed of at least an organic compound that is insoluble in the thermal-storage solution and has a specific gravity lower than that of the thermal-storage solution, and also has a melting point of normal temperature or higher (including an organic compound having a melting point of normal temperature or higher) . A specific configuration of the organic compound will be mentioned below.

In the case of fats and oils, or a multi-component system, a melting point of which is unclear, the melting point is regarded as a pour point having the same meaning. The pour point is measured in accordance with the Japanese Industrial Standards (JIS) K2269.

The evaporation prevention layer 13 may contain, in addition to an organic compound as a main component, known other components so as to be provided with physical properties that are suited for realization of the below-mentioned evaporation prevention function, leakage prevention function, and pressure relaxation function, or to be provided with physical properties that are required for the evaporation prevention layer 13 to be stably stored in the thermal-storage container 21. Specific examples thereof include antioxidants, corrosion inhibitors, anti-rust agents, pour point depressants, defoamers, and viscosity adjusters. There is also no particular limitation on addition amount and addition method of these additives, and amount in a known range or technique can be used.

Therefore, both the thermal-storage solution layer 11 and the evaporation prevention layer 13 may be composed of a composition prepared by mixing a plurality of components according to a specific formulation. In this case, the thermal-storage solution layer 11 is composed of a thermal-storage solution composition containing water, and the evaporation prevention layer 13 is composed of an evaporation prevention composition containing an organic compound as a main component.

Even if the organic compound as the main component contains the above-mentioned additives in the evaporation prevention layer 13, similar effect can be obtained, needless to say, as long as the additives satisfy conditions such as specific gravity and melting point in that state.

### [Configuration of Organic Compound]

The organic compound contained as a main component of the evaporation prevention layer 13 of the present embodiment will be described below by way of examples.

Typical examples of the organic compound used as the material of the evaporation prevention layer 13 in the present embodiment include low-melting point paraffins such as n-tricosane, n-docosane and n-heneicosane, polyethylene waxes, and alkene polymers such as polyolefin.

The former low-melting point paraffin, that is, n-tricosane is a linear hydrocarbon having 23 carbon atoms, a melting point of 46°C and a specific gravity of 0.7969, n-docosane is a linear hydrocarbon having 22 carbon atoms, a melting point of 46°C and a specific gravity of 0.7778, and n-heneicosane is a linear hydrocarbon having 21 carbon atoms, a melting point of 42°C and a specific gravity of 0.792. All of them are insoluble in a thermal-storage solution and have small specific gravity, and also have a melting point of a boiling point or less of the thermal-storage solution. The latter alkene polymer is obtained by polymerizing at least one alkene compound (organic compound including a double bond between carbon atoms) and the melting point varies depending on the structure of a monomer, polymerization degree and molecular weight. Specifically, the above-mentioned alkene polymer has at least a structure represented by at least any one of the following general formulas (1), (2), (3) and (4).

In the general formula, R¹, R² and R³ are respectively organic groups having 1 or more carbon atoms.

As long as the alkene polymer is insoluble in a thermal-storage solution and has a specific gravity lower than that of the thermal-storage solution, and also has a melting point of normal temperature or higher, specific type of organic groups R¹ to R³ is not particularly limited and the organic group may be known any organic group. In general, when organic groups R¹ to R³ as the side chain are linear, high crystallinity is achieved. As desired in the present embodiment, the alkene polymer preferably has high crystallinity so as to further enhance the evaporation prevention function, and organic groups R¹ to R³ are more preferably linear organic groups.

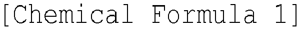

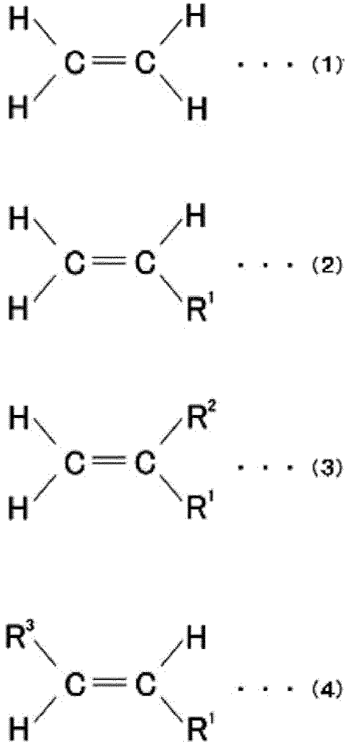

Examples of the linear organic group include, but are not limited to, linear alkyl groups such as an octyl group, a nonyl group, a decyl group, a undecyl group, a dodecyl group, a tridecyl group, a tetradecyl group, a pentadecyl group, a hexadecyl group, a heptadecyl group, an octadecyl group, a nonadecyl group, and an icosyl group; aromatic alkyl group (also including heterocyclic alkyl groups) such as a phenylethyl group, a phenylpropyl group, a phenylbutyl group, a phenylpentyl group, a phenylhexyl group, a phenylheptyl group, a 4-propyltolyl group, and a (1-ethyl-4-phenyl)propyl group; linear alkylphenyl groups or linear alkyl aromatic groups, such as an ethylphenyl group, a propylphenyl group, a butylphenyl group, a pentylphenyl group, and a hexylphenyl group; linear alkoxyl groups such as an octyloxy group, a nonyloxy group, a decyloxy group, a undecyloxy group, a dodecyloxy group, a tridecyloxy group, an octadecyloxy group, and a nonadecyloxy group; alkenyl groups (the position of a double bond is not limited) such as an octenyl group, a noneyl group, a decynyl group, a undecynyl group, a dodecynyl group, a tridecynyl group, a tetradecynyl group, a pentadecynyl group, a hexadecynyl group, a heptadecynyl group, an octadecynyl group, a nonadecynyl group, and an icosynyl group; alkanyl groups (the position of a triple bond is not limited); carboxyl groups such as an octanoyl group, a nonynoyl group, and a decynoyl group; alkylamino groups such as an N-octylamino group, an N-nonylamino group, and an N-decylamino group; alkylamide groups such as a dibutylamide group, a butylpentylamide group, and a phenylethylamide group; alkyl phosphide groups such as a dibutyl phosphide group, a butylpentyl phosphide group, and a phenylethyl phosphide group; and alkyl sulfide groups such as an octyl sulfide group, a nonyl sulfide group, and a decyl sulfide group. In the organic groups, any hydrogen atom may be substituted with a halogen atom, any methyl group may be substituted with a silyl group. When containing an oxygen atom or a sulfur atom, it may be substituted with other group 16 elements. When containing a phosphorus atom, it may be substituted with other group 15 elements. When crystallinity may be less likely to be disturbed or an improvement in crystallinity is expected, various side chain structures or cyclic structures may be included.

There is no particular limitation on the polymerization method (synthesis method) of an alkene polymer in the present embodiment, and various known methods can be used. The monomer used in the polymerization of the alkene polymer may contain at least an alkene compound having a structure represented by the general formula (1), (2), (3) or (4). The monomer may contain two types of alkene compounds among compounds having structures represented by the general formulas (1), (2), (3) and (4), and also may contain alkene compounds having structures represented by the general formulas (1) to (4).

These monomers may be alone, or two or more monomers may be used. For example, when the alkene compound to be used as the monomer is only a compound (vinyl compound) represented by the general formula (2), an organic group R¹ as a substituent may be only one organic group, and compounds having plural types of organic groups may be used in combination. That is, the alkene compound used represented by the general formula (2) may be only a specific vinyl compound, and plural types of vinyl compounds may be used.

Monomer compounds other than alkene compounds represented by the general formulas (1) to (4) may be contained as the monomer. In this case, the obtained polymer is a copolymer of an alkene and the other monomer compound. There is no particular limitation on the other monomer compound, and the other monomer may be copolymerizable with alkene compounds such as (meth) acrylic acid ester, acrylonitrile, vinyl halide, and vinyl alcohol.

When the monomer is polymerized, various catalysts, polymerization solvents and various additives may be used. The alkene compound in the present embodiment can be produced, for example, by preparing a monomer composition prepared by mixing the alkene compound with a catalyst, a solvent and additives according to any formulation, and polymerizing the monomer composition in any polymerization reactor under any condition.

Examples of an example of the polymerization method, that is usable in the present embodiment include, but are not limited to, a specific method disclosed in Reference Patent Document: WO 2002/014384 A (corresponding Japanese translation of PCT international application: JP 2004-506758 W) and a specific method disclosed in Patent Document cited in the document (all of which is incorporated by reference herein).

The structure of the obtained alkene polymer is a structure represented by the following general formula (5) or (6). In the general formula, R¹ is an organic group as mentioned above, X¹ is a hydrogen atom or a substituent of the above-mentioned R², and X² is a hydrogen atom or a substituent of the above-mentioned R³. Y in the general formula (6) is a divalent atom such as an oxygen atom or a sulfur atom, or a monomer structure other than an alkene compound. The repeating number "n" of a monomer structural unit may be an integer that can be appropriately selected in a preferable range of a molecular weight.

Since a monomer structural unit in a single polymer molecule may correspond to the following general formula (5) or (6), an alkene polymer may be composed of only one type of a structural unit, or plural types of structural units may be included. That is, R¹, X¹ and X² may be the same organic group or substituent in all monomer structural units in the same molecule, or may be different organic groups or substituents in each of monomer structural units in the same molecule.

There is no particular limitation on the molecular weight of the obtained alkene polymer and, in the present embodiment, the number average molecular weight is preferably 1,000,000 or less. When the number average molecular weight is 1,000,000 or less, the melting point of the alkene polymer becomes the temperature higher than normal temperature, and thus the alkene polymer is maintained in a solid form at normal temperature. The temperature conditions of the obtained alkene polymer (permissible range of melting point) will be described hereinafter.

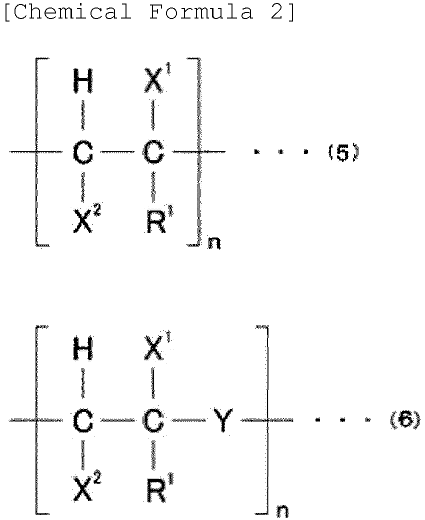

### [Function of Evaporation Prevention Layer]

The function of an evaporation prevention layer 13 containing the above-mentioned organic compound will be specifically described with reference to Fig. 1(b).

In the present embodiment, the evaporation prevention layer 13 contains at least the above-mentioned organic compound that is insoluble in a thermal-storage solution and has a specific gravity lower than that of water, and also has a melting point of normal temperature or higher, and the evaporation prevention layer is in a solid or semisolid form in a state where a thermal-storage operation is not performed.

As used herein, semisolid refers to a state that corresponds to the middle of solid and liquid states, such as a thermal deformation state or a glass transition state.

Regarding the thermal-storage solution layer 11 and the evaporation prevention layer 13, a comparison is made with a change in a phase state from a solid phase into a liquid phase with a temperature change. As shown in Fig. 4(b), any layer is in a solid or semisolid form (shaded region in the drawing) at low temperature. As the temperature gradually becomes higher, the thermal-storage solution layer 11 causes phase change from a liquid to a solid at a solidifying point Pf, and is maintained as liquid until reaching a boiling point Pb. On the other hand, the evaporation prevention layer 13 is in the form of a solid or semisolid at a solidifying point Pf of a thermal-storage solution and is maintained in a solid or semisolid form even in a range of normal temperature (region surrounded by dashed-dotted lines in the drawing).

The organic compound constituting the evaporation prevention layer 13 reaches a melting point Pm, at which the compound is liquefied as a high-viscosity liquid. In the present embodiment, a range of normal temperature is defined as a range of 20°C±15°C (5°C or higher and 35°C or lower) in accordance with the Japanese Industrial Standards JIS Z 8703. Therefore, the melting point Pm of the organic compound may be higher than 35°C.

When the temperature of the thermal-storage solution layer 11 further increases, the thermal-storage solution is boiled upon reaching a boiling point Pb, resulting in initiation of evaporation, while evaporation prevention layer 13 is maintained at a high-viscosity liquid. When the organic compound constituting the evaporation prevention layer 13 is an alkene polymer, pyrolysis occurs without being evaporated upon reaching sufficiently high temperature. Therefore, a pyrolysis temperature Pt is also shown in Fig. 1(b).

As mentioned above, since the evaporation prevention layer 13 turns into a solid or semisolid form in a range of normal temperature, the thermal-storage solution can be effectively prevented from being excessively evaporated (realization of the evaporation prevention function), and also leakage of the thermal-storage solution constituting thermal-storage solution layer 11 out of the thermal-storage container 21 and the exposure to the air layer 12 can be suppressed when the thermal-storage device 20A is transported (realization of the leakage prevention function). Even if the temperature of the thermal-storage solution rises upon a thermal-storage operation, the evaporation prevention layer 13 turns into a high-viscosity liquid layer, so that the thermal-storage solution can be effectively prevented from being excessively evaporated.

Still further, even if the vapor pressure rises or a gas such as dissolved oxygen contained in the thermal-storage solution is isolated due to evaporation of the thermal-storage solution, the evaporation prevention layer 13 is in the form of a high-viscosity liquid, so that a top surface of the thermal-storage solution layer 11 is satisfactorily covered with the evaporation prevention layer 13 even if the thermal-storage solution layer 11 undergoes expansion. Moreover, even if the pressure significantly rises, steam or free gas is partially comes off from the liquid evaporation prevention layer 13 to the air layer 12, so that the pressure would not rise excessively and the sufficient treatment can be taken against the rise of pressure of the thermal-storage solution (realization of the pressure relaxation function). Therefore, it is possible to satisfactorily realize all of the evaporation prevention function, the leakage prevention function, and the pressure relaxation function. As a result, the thermal-storage solution can be stably stored in the thermal-storage container 21 and a thermal-storage device 20B having excellent handling properties can be obtained.

In the present embodiment, the melting point Pm of the organic compound used as the material of the evaporation prevention layer 13 is preferably lower than a boiling point Pb of a thermal-storage solution. In the present embodiment, since an aqueous solution is used as the thermal-storage solution, the boiling point Pb substantially becomes 100°C. Therefore, a melting point Pm of an organic compound is preferably 35°C or higher and lower than 100°C. Since the melting point of the organic compound is lower than a boiling point of the thermal-storage solution, the organic compound can be certainly melted in a temperature range where a thermal-storage operation is performed. Therefore, it is possible to satisfactorily realize all of the evaporation prevention function, the leakage prevention function and the pressure relaxation function.

As an example of a particularly preferable alkene polymer in the present embodiment, a polymer having 18 carbon atoms using an alkene compound as a monomer can be exemplified. When this polymer is used as the material of the evaporation prevention layer 13, the evaporation prevention layer contains a specific range of a poly-alpha olefin having 18 carbon atoms as an alkene polymer, and thus physical properties of the evaporation prevention layer 13 are further stabilizer. Therefore, it is possible to satisfactorily realize all of the evaporation prevention function, the leakage prevention function and the pressure relaxation function.

If the evaporation prevention layer 13 is composed of the above-mentioned organic compound as a main component, the evaporation prevention layer 13 can be formed only by laminating on the thermal-storage solution layer 11, and also it is possible to suppress possibility of quality of the thermal-storage solution from being decreased due to formation of a large amount of an organic acid. Therefore, it is possible to avoid production costs or maintenance costs of a thermal-storage device 20B from being increased.

### (Third Embodiment)

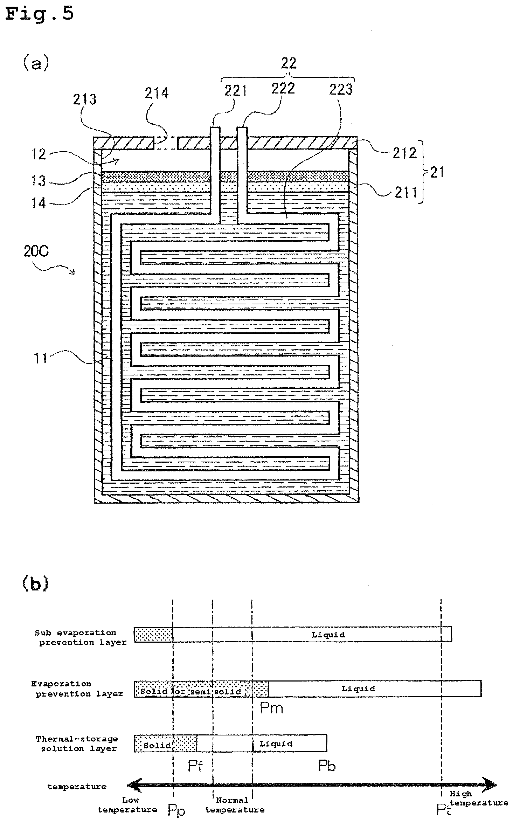

While the thermal-storage device 20B in the second embodiment had a configuration in which three layers of a thermal-storage solution layer 11, an evaporation prevention layer 13 and an air layer 12 are formed in order from the bottom in a thermal-storage container 21, the present embodiment has a configuration in which one or more sub evaporation prevention layers are further provided between the thermal-storage solution layer 11 and the evaporation prevention layer 13. The configuration will be specifically described with reference to Figs. 5(a) and 5(b).

### [Layer Configuration in Thermal-Storage Container]

As shown in Fig. 5(a), while a thermal-storage device 20C according to the present embodiment has a configuration identical to that of the thermal-storage device 20B according to the second embodiment, four layers of a thermal-storage solution layer 11, a sub evaporation prevention layer (second evaporation prevention layer) 14, an evaporation prevention layer 13 (main evaporation prevention layer 13) and an air layer 12 are formed in order from the bottom in a thermal-storage container 21.

The sub evaporation prevention layer 14 is a layer that prevents or suppresses a thermal-storage solution constituting both the evaporation prevention layer 13 and the thermal-storage solution layer 11 from being evaporated (realized the evaporation prevention function) and, in the present embodiment, the sub evaporation prevention layer is formed as an independent layer below the evaporation prevention layer 13. Not showing in Fig. 5 (a), the sub evaporation prevention layer 14 may be combined with the evaporation prevention layer 13 to form a substantially one layer. This sub evaporation prevention layer 14 is composed of a solvent composition of at least one water-insoluble solvent. It is possible to preferably use, as the solvent composition, as mentioned below, an example of a solvent composition in which a water-insoluble solvent accounts for 85 to 95% by weight, balance being composed of a mixture of additives such as an antioxidant.

When two or more sub evaporation prevention layers 14 are formed, each sub evaporation prevention layer 14 may be composed of a solvent composition with a different composition and is independently formed without being mixed with each other, or sub evaporation prevention layers 14 may be mixed with each other or mixed with the evaporation prevention layer 13.

The water-insoluble solvent used in the solvent composition may be a non-polar solvent that has substantially no polarity, or a low polar solvent that has low polarity so as to form a single layer isolated from an aqueous layer without being substantially mixed with water at normal temperature, and it may be in a liquid form in at least normal temperature range.

In the present embodiment as water-insoluble solvent contains hydrocarbons having carbon atoms within a range from 24 to 44 being saturated alkanes.

The fact that, the solvent composition contains such water-insoluble solvent, means that the solvent composition contains a hydrocarbon having a molecular weight in a specific range. Therefore, as mentioned below, it is possible to further ensure retention of fluidity at low temperature of the sub evaporation prevention layer 14. More desirably, this solvent composition can still more ensure retention of fluidity at low temperature as the main component contains a hydrocarbon having carbon atoms within a range from 24 to 44.

A carbon structure of this water-insoluble solvent will be described. Generally speaking, saturated alkanes (also referred to as saturated hydrocarbon) are in the form of a gas at normal temperature in the case of having 4 or less carbon atoms, a liquid at normal temperature in the case of having about 5 to 18 carbon atoms, or a solid at normal temperature in the case of having more than about 18 carbon atoms. Regularity of this general rule is established for saturated alkanes having a linear structure that is composed of linearly arranged carbon atoms and is free from branching. Branched saturated alkanes are in a liquid form at normal temperature even in the case of having more than about 18 carbon, atoms. According to the invention α-olefin having 8 to 10 carbon atoms (an unsaturated alkene having a structure that has a double bond at the end and has a single bond at other moieties) is subjected to a hydrogenation treatment after a polymerization reaction, saturated alkanes containing at least any one of hydrocarbons having carbon atoms within a range from 24 to 44 are formed. Moreover, the saturated alkanes have been converted into saturated alkanes having a large amount of branching by devising the polymerization reaction, and thus the saturated alkanes are in the form of liquid at normal temperature. Synthetic oil or semi-synthetic oil and mineral oil to be used in the present embodiment are used after mixing with 85 or more and little less than 100% (% by weight) of a water-insoluble solvent obtained by using this production process.

It is difficult for the hydrocarbon having carbon atoms within the above number range to control the number of carbon atoms by current technology, and thus the number of carbon atoms is often controlled by letting things take their course. Therefore, a hydrocarbon having less than 24 carbon atoms is likely to form saturated alkanes having a linear structure, leading to a problem that a liquid having high volatility is formed and is immediately evaporated, resulting in short lifetime. To the contrary, a hydrocarbon having 45 or more carbon atoms is likely to be in a solid form at normal temperature, leading to a problem that it is hard to handle. As mentioned above, because of long lifetime due to less evaporation, liquid form at normal temperature and easy handling, a composition containing at least any one of hydrocarbons having carbon atoms within a range from 24 to 44 was used as a water-insoluble solvent. In addition, this water-insoluble solvent is less likely to form an organic acid and exhibits high air tightness, and thus having an advantage that evaporation of the thermal-storage solution is prevented or suppressed, and oxygen in air is less likely to penetrate into the thermal-storage solution.

The solvent composition may contain, in addition to the water-insoluble solvent, known other components. Specifically, antioxidants, corrosion inhibitors, anti-rust agents and defoamers can be exemplified. There is also no particular limitation on addition amount and addition method of these additives, and amount in a known range or technique can be used.

There is no particular limitation on specific composition of the solvent composition. In the present embodiment, as mentioned above, it is possible to preferably exemplify a configuration in which the amount of at least one water-insoluble solvent is within a range from 85 to 95% by weight, balance being composed a mixture containing the above additives (within a range of 5 to 15% by weight) . Needless to say, the composition can be appropriately designed according to various conditions such as performances required to the sub evaporation prevention layer 14, and operating environment of the thermal-storage device 20C.

There is no particular limitation on the temperature condition of the solvent composition, and since the solvent composition is preferably in a liquid form at a normal temperature range, the melting point is preferably lower than normal temperature. As mentioned below, the melting point of the solvent composition is preferably lower than a solidifying point of a thermal-storage solution.

### [Function of Sub Evaporation Prevention Layer]

Specific function of the sub evaporation prevention layer 14 containing the water-insoluble solvent will be specifically described below with reference to Fig. 5(b).

Regarding the thermal-storage solution layer 11, the evaporation prevention layer 13 and sub evaporation prevention layer 14, a comparison is made with a change in a phase state from a solid phase into a liquid phase with a temperature change. As shown in Fig. 5(b), phase change of the thermal-storage solution layer 11 and the evaporation prevention layer 13 is as described in the second embodiment. In the example shown in Fig. 5(b), the sub evaporation prevention layer 14 is substantially maintained in a liquid form even if it is in a normal temperature range and exceeds normal temperature.

As mentioned above, in a normal temperature range, the sub evaporation prevention layer 14 is in a liquid form while the evaporation prevention layer 13 is in a solid form, so that the evaporation prevention layer 13 enables realization of the evaporation prevention function of the thermal-storage solution and also enables realization of the leakage prevention function of the thermal-storage solution and the sub evaporation prevention layer 14. Moreover, the temperature of the thermal-storage solution rises during a thermal-storage operation, the evaporation prevention layer 13 turns into a liquid layer having high viscosity and the sub evaporation prevention layer 14 is retained by a liquid layer having relatively low viscosity regardless of being used or not. Therefore, the thermal-storage solution is protected with two liquid layers, and also adhesion between the liquid layers increases.

As a result, although each steam penetration hole in these layers becomes smaller when compared with the case of using each layer alone, leading to an improvement in the evaporation prevention function, it becomes possible to let steam of the surplus thermal-storage solution escape from these layers (improvement in pressure relaxation function). It is also possible to seal cracks formed after curing of the evaporation prevention layer 13 by the sub evaporation prevention layer 14, after the thermal-storage operation (improvement in pressure relaxation function).

As shown in Fig. 5(b), the melting point Pp of the solvent composition is lower than the solidifying point Pf of the thermal-storage solution. Therefore, even if the temperature of the thermal-storage device 20B falls until the thermal-storage solution is solidified, the solvent composition can retain fluidity, and thus enabling effective realization of evaporation prevention function even in a state of low temperature. Even if the thermal-storage solution is solidified, the solvent composition is not yet solidified, and thus making it possible to reduce volume expansion caused by solidification of the thermal-storage solution, and to still further ensure the pressure relaxation function. In particular, the solvent composition containing a hydrocarbon having carbon atoms within a range from 24 to 44 provides an advantage capable of more satisfactorily maintaining fluidity at low temperature of the sub evaporation prevention layer 14.

As mentioned above, formation of the sub evaporation prevention layer 14 in the thermal-storage container 21, in addition to the evaporation prevention layer 13, enables satisfactorily realization of all of the evaporation prevention function, the leakage prevention function and the pressure relaxation function by the evaporation prevention layer 13, and also enables still more improvement in each function. Therefore, the thermal-storage solution can be stably stored in the thermal-storage container 21, and thus a thermal-storage device 20C having excellent handling properties can be obtained.

A specific gravity of an organic compound (or an evaporation prevention composition containing the same) constituting the evaporation prevention layer 13 is preferably lower than that of a solvent composition constituting the sub evaporation prevention layer 14. Therefore, since the evaporation prevention layer 13 becomes lighter than the sub evaporation prevention layer 14 even if the organic compound as a main component of the evaporation prevention layer 13 is in a solid form, the evaporation prevention layer necessarily "floats" on the upper layer of the sub evaporation prevention layer 14. Therefore, even if the evaporation prevention layer 13 turns into a liquid phase at high temperature, it is possible to still more ensure evaporation prevention function.

In addition, the amount of the sub evaporation prevention layer 14 in a liquid form increases as it is located further below the evaporation prevention layer 13. Therefore, it is possible to seal cracks formed after curing of the evaporation prevention layer 13 by the sub evaporation prevention layer 14, still more certainly, after the thermal-storage operation (the sub evaporation prevention layer 14 can partially penetrate into cracks). As a result, it is possible to still more improve the evaporation prevention function and the leakage prevention function. In this case, when both the evaporation prevention layer 13 and the sub evaporation prevention layer 14 are remarkably likely to be miscible with each other and also integrated with each other at high temperature, it is possible to recognize a phenomenon in which the sub evaporation prevention layer 14 is partially incorporated into the evaporation prevention layer 13 formed into a solid when returned to normal temperature after the thermal-storage operation. Since the sub evaporation prevention layer 14 had a greater specific gravity, the amount increases as it is located further below, leading to formation of a solid, a gel and a liquid in the order from the above. In this case, even if the bottom layer is in a gel form, the hole sealing effect against the above-mentioned cracks is exerted. In order to exert the effect more effectively, when a ratio of the sub evaporation prevention layer 14 to the evaporation prevention layer 13 is increased, the liquid amount of the bottom layer increases. Therefore, the ratio of the sub evaporation prevention layer 14 to the evaporation prevention layer 13 is preferably designed taking account of the liquid amount of the bottom layer that remains at normal temperature.

Furthermore, since both the evaporation prevention layer 13 and the sub evaporation prevention layer 14 can be easily formed by laminating on the thermal-storage solution layer 11, and the evaporation prevention layer 13 contains an alkene polymer as a main component, as mentioned above, it is possible to suppress quality of the thermal-storage solution from causing deterioration due to a large amount of an organic acid. Therefore, it is possible to avoid an increase in production costs or maintenance costs of a thermal-storage device 20C.

### (Fourth Embodiment)

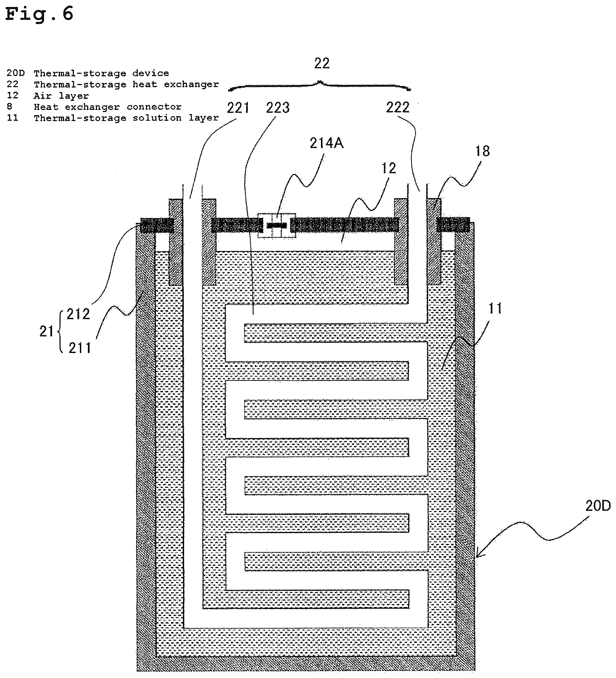

Fig. 6 is a cross-sectional view of a thermal-storage device 20D according to a fourth embodiment of the present invention.

The thermal-storage device is characterized by further including a protection unit that is disposed so as to come in contact with an interface between an air layer 12 and a thermal-storage solution layer 11 (or an evaporation prevention layer 13 or a sub evaporation prevention layer 14) and is configured to isolate the heat exchanger from the interface.

Thereby, it is possible to prevent from corrosion at the interface between the air layer 12 and the thermal-storage solution layer 11 (or the evaporation prevention layer 13 or the sub evaporation prevention layer 14) of the thermal-storage heat exchanger.

With respect to the portion that overlaps with any one of the first to third embodiments, a description was omitted as much as possible. Therefore, each component of the thermal-storage device 20D may have the same configuration as those of the thermal-storage devices 20A to 20C unless otherwise specifically described.

In the present embodiment, a thermal-storage tank may include a cover portion provided with an opening through which the heat exchanger passes, and the protection unit may be a heat thermal-storage exchanger connector that connects the cover portion to the thermal-storage heat exchanger. Thereby, it is possible to prevent corrosion at the interface between the thermal-storage solution layer and the air layer of the thermal-storage heat exchanger.

In the present embodiment, thermal-storage tank may include a cover portion having an opening through which the heat exchanger passes, and the opening may be disposed in a part of the cover portion, and the recessed portion may be disclosed to come in contact with the interface to form the protection unit. Since the protection unit can be formed by the cover portion, the protection unit can be formed at low costs.

In the present embodiment, the cover portion may include an internal pressure control unit configured to enable communication between the air layer and the atmosphere at the position in contact with the air layer. Because of opening under a predetermined pressure lower than a pressure withstanding strength of a thermal-storage container, a thermal-storage container can be formed using a container other than a pressure resistant container.

In the present embodiment, the thermal-storage type heat exchanger may be partially formed of copper or aluminum. Even if the heat exchanger is formed of copper or aluminum, the corrosion can be prevented.

In the present embodiment, a main component of the thermal-storage solution may be a mixed solution of water and an unfreezable dihydric alcohol. Because of its inexpensiveness and large heat capacity, the mixed solution is suitable as a thermal-storage solution layer and can prevent freezing of the thermal-storage solution layer.

In Fig. 6, a thermal-storage device 20D includes a thermal-storage container 21 including a box portion 211 and a cover portion 212; an internal pressure control unit 214A disposed in the cover portion 212; a thermal-storage solution layer 11 filled in the thermal-storage container 20D; a thermal-storage type heat exchanger 11 immersed in the thermal-storage solution layer 11; and a heat exchanger connector 18. An air layer 12 exists on the upper portion of the thermal-storage solution layer 11.

Not showing in Fig. 6, the thermal-storage device preferably includes the evaporation prevention layer 13 shown in the first to third embodiments between the thermal-storage solution layer 11 and the air layer 12. The thermal-storage device may include the sub evaporation prevention layer 14 shown in the third embodiment below (between the thermal-storage solution layer 11 and the evaporation prevention layer 13) the evaporation prevention layer 13.

The internal pressure control unit 214A is made of a rubber material having pinholes and is fit into the position that comes into contact with air layer 12 in the cover portion 212. A vent hole 214 shown in the first to third embodiments may be used in place of the internal pressure control unit.

The thermal-storage solution layer 11 may be a mixture of ethylene glycol as an unfreezable dihydric alcohol with water. In this case, a mixing ratio of water to ethylene glycol is 70%:30%. Although ethylene glycol has a boiling point of 198°C and a melting point of -13°C, the boiling point becomes 103°C and the freezing temperature becomes -15°C by adjusting to the above mixing ratio. The filling amount of the thermal-storage solution layer 11 is set so that maximum volume thereof becomes smaller than the value obtained by removing the volume of the thermal-storage type heat exchanger 22 and the heat exchanger connector 18 immersed in the thermal-storage solution layer 11 from the volume of the box portion 211. Thereby, the air layer 12 is ensured.

The thermal-storage type heat exchanger 11 is composed, for example, a coil of copper, and is connected and fixed to the cover portion 212 by the heat exchanger connector 18. After completion of the thermal-storage device 20D, the thermal-storage type heat exchanger is connected to an external pipe via an inlet 221 and an outlet 222. The heat exchanger connector 18 is made, for example, of brass and is provided with a communication hole through which the thermal-storage type heat exchanger 22 passes. After inserting thermal-storage type heat exchanger 22 into the communication hole, the communication hole is welded with the thermal-storage heat exchanger 22 over the whole periphery of a plug-in, followed by integral molding.

The heat exchanger connector 18 has sufficient length for the air layer 12, and passed through the air layer 12, and the plug-in is disposed at the position immersed in the thermal-storage solution layer 12. Thereby, it becomes possible to retain the thermal-storage solution layer 11 made of a copper coil inside the thermal-storage device 20D while being isolated from the air layer 12.

### (Fifth Embodiment)

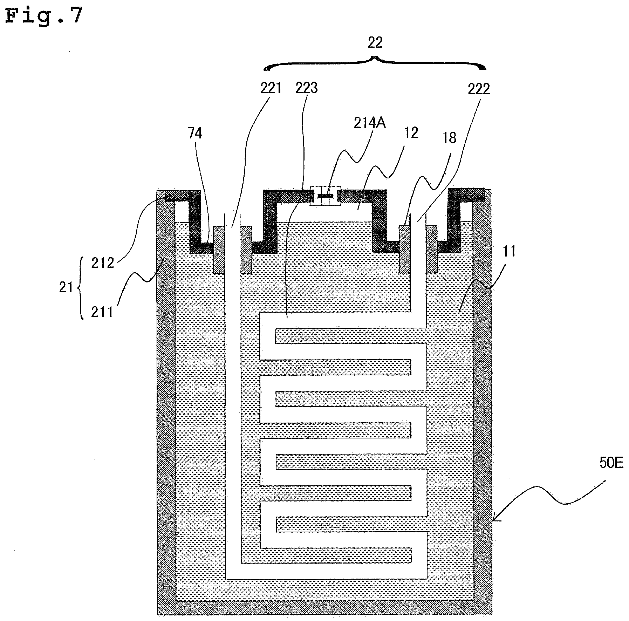

Fig. 7 is a cross-sectional view of a thermal-storage device 50E according to a seventh embodiment according to the present invention.

The present embodiment is different from the fourth embodiment in that the cover portion 212 is provided with a recessed portion 74 and a heat exchanger connector 18 is disposed on a bottom surface (deepest portion) of the recessed portion 74.

In Fig. 7, similar to the above-mentioned thermal-storage device 50D, the thermal-storage device 50E includes a thermal-storage container 22 including a box portion 211 and a cover portion 212; an internal pressure control unit 214A disposed at the cover portion 212; a thermal-storage solution layer 11 filled in the thermal-storage container 22; and a thermal-storage type heat exchanger 22 immersed in the thermal-storage solution layer 11. An air layer 12 exists on the upper portion of the thermal-storage solution layer 11, thereby forming an interface with a thermal-storage material.

Not showing in Fig. 7, the thermal-storage device preferably includes the evaporation prevention layer 13 shown in the first to third embodiments between the thermal-storage solution layer 11 and the air layer 12. The thermal-storage device may include the sub evaporation prevention layer 14 shown in the third embodiment below the evaporation prevention layer 13.

Since the box portion 211, the internal pressure control unit 214A and the thermal-storage solution layer 11 are similar to those in the fourth embodiment, detailed description is omitted. The thermal-storage type heat exchanger 22 is composed, for example, a coil of aluminum, and is connected and fixed to the cover portion 212 by the heat exchanger connector 18. After completion of the thermal-storage device 50E, the thermal-storage type heat exchanger is connected to an external pipe.

The heat exchanger connector 18 may be made of brass and is provided with a communication hole through which the thermal-storage type heat exchanger 22 passes. After inserting thermal-storage type heat exchanger 22 into the communication hole (after partially disposing the thermal-storage type heat exchanger 22 in the communication hole), the communication hole is welded with the thermal-storage heat exchanger 22 over the whole periphery of a plug-in, followed by integral molding.

The thermal-storage device includes a cover body (cover portion) 212 and a recessed portion 74 having sufficient depth for the air layer 12, and a heat exchanger connector 18 is disposed on a deepest portion (bottom surface of the recessed portion 74) of the recessed portion 74 that passes through the air layer 12.

Thereby, it becomes possible to retain the thermal-storage solution layer 22 made of aluminum inside the thermal-storage device 50E in a state where the thermal-storage type heat exchanger is isolated from the air layer 12. Therefore, similar to the fourth embodiment, the thermal-storage type heat exchanger 22 made of copper is prevented from being exposing to the corrosive environment containing oxygen over the long term inside the thermal-storage device 50E, and thus enabling an improvement in durability of the thermal-storage device 50E.

### (Sixth Embodiment)

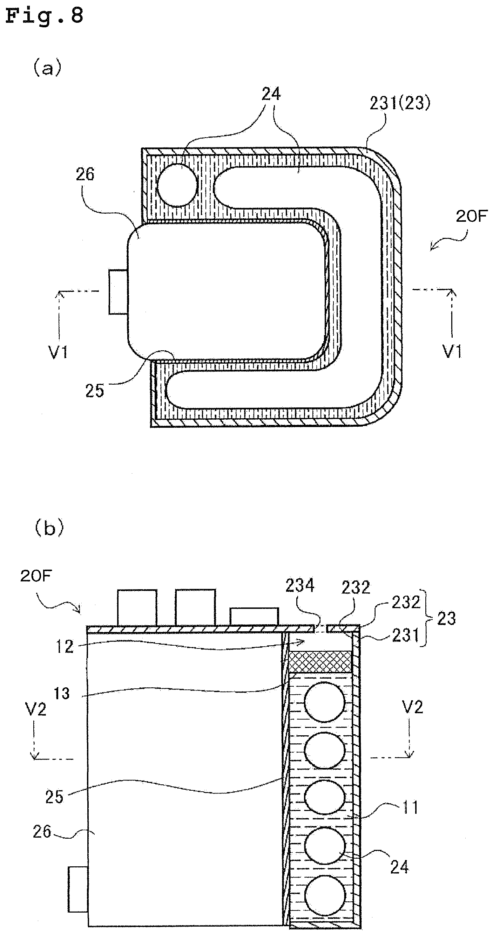

While all of the thermal-storage devices 20A to 20E according to the first to fifth embodiments are composed of the thermal-storage container 21 and the thermal-storage type heat exchanger 22, a thermal-storage device 20F according to the present sixth embodiment is further provided with a heat source 26 and is configured to enable thermal storage of waste heat of this heat source 26. The configuration will be specifically described with reference to Figs. 8(a) and 8(b).

As shown in Fig. (a) and (b), the thermal-storage device according to the present embodiment 20F is provided with, in addition to the thermal-storage container 23 and the thermal-storage type heat exchanger 24, a thermal conductive member 25 and a compressor 26 as a heat source. A cross section taken along line V1-V1 in Fig. 8 (a) corresponds to a longitudinal cross-sectional view of the thermal-storage device 20F shown in Fig. 8(b). A cross section taken along line V2-V2 in Fig. 8(b) corresponds to a transverse cross-sectional view of the thermal-storage device 20F shown in Fig. 8(a).

Similar to the thermal-storage container 21 in the first to fifth embodiments, the thermal-storage container 23 includes a box portion 231 and a cover portion 232, and a cover portion 232 is attached so as to close an upper opening 233 of the box portion 231. Similar to the box portion 211 in the first to fifth embodiments, the box portion 231 has substantially approximately rectangular shape. However, unlike the box portion 211, the interior space for storing a thermal-storage solution therein has an approximately U-shaped cross section so as to surround the side of the compressor 26 as shown in Fig. 8. As shown in Fig. 8, a thermal-storage type heat exchanger 24 is provided inside the box portion 231, and a thermal-storage solution layer 11 is formed so as to immerse most of the thermal-storage solution layer. An evaporation prevention layer 13 shown in any one of the first to third embodiments is laminated above the thermal-storage solution layer 11, and also an air layer 12 is formed above the evaporation prevention layer 13 by outside air that flow into the space via a vent hole 234 provided in the cover portion 232.

Similar to the third embodiment, the thermal-storage device may include the sub evaporation prevention layer 14 shown in the third embodiment below (between the thermal-storage solution layer 11 and the evaporation prevention layer 13) the evaporation prevention layer 13.

The compressor 26 allows a refrigerant used in an air conditioner to undergo compression, and a compressor having a known configuration is used. In Figs. 8(a) and 8(b), only an external form of the compressor 26 is schematically shown for the convenience sake of the description. In the present embodiment, as shown in Figs. 8 (a) and 8 (b), the external form of the compressor 26 has an approximately rectangular shape, and a thermal-storage container 23 is located so as to surround three sides of four side of the rectangular shape. Since the interior space of the thermal-storage container 23 (box portion 211) has an approximately U-shaped cross section as mentioned above, the compressor 26 is located at the region that serves as a recessed site in the U-shaped cross section, whereby, at least a part of the periphery of the compressor 26 is surrounded by the thermal-storage container 23.

As mentioned above, when the thermal-storage container 23 is located at the periphery of the compressor 26, the compressor 26 and the thermal-storage container 23 are substantially integrated. Therefore, waste heat generated in the compressor 26 scarcely escapes outside of the thermal-storage container 23 and is transferred to the thermal-storage solution layer 11 inside thermal-storage container 23. Therefore, the compressor 26 as the external device can be used as a heat source and waste heat from the compressor 26 can be efficiently stored.

It is particularly preferred that a layered thermal conductive member 25 is provided between the side of the compressor 26 and the thermal-storage container 23. The compressor 26 may be directly in contact with the thermal-storage solution layer 11 inside the thermal-storage container 23. In this case, it is necessary that a waterproof treatment is applied to the side of the compressor 26. The shape of the thermal-storage container 23 may be configured to have an approximately U-shaped cross section according to the compressor 26. However, in addition to an increase in costs due to complicated processing of the thermal-storage container 23, it becomes difficult to increase adhesion between an external surface of the thermal-storage container 23 and the side of the compressor 26. Therefore, like the present embodiment, the thermal conductive member 25 is preferably provided.

There is no particular limitation on specific configuration of the thermal conductive member 25 as long as the periphery the periphery of the compressor 26 can be covered and also heat from the compressor 26 can be satisfactorily transferred to the thermal-storage solution layer 11. Specific examples of the thermal conductive member include a metal sheet formed of copper, silver, aluminum or an alloy thereof; a thermal conductive sheet in which particles of graphite or metal are dispersed in a resin composition; and a thermal conductive grease in which particles of graphite or metal are dispersed in a gel-like composition.

As mentioned above, heat from the compressor 26 can be satisfactorily recovered through a thermal-storage device 20B by contacting the thermal-storage container 23 with the compressor 26 via the thermal conductive member 25. In particular, when the thermal conductive member 25 is a thermal conductive sheet, selection of a flexible material, for example, an elastomer material such as an ethylene-propylene-tercopolymer (EPDM) or a silicone rubber, as a resin composition, enables satisfactory contact between the compressor 26 and the thermal-storage container 23 even if irregularity exists on the side of the compressor 26, and thus enabling still more smooth thermal conduction from the compressor 26 to thermal-storage container 23.

Also in the present embodiment, the evaporation prevention layer 13 described in the first to third embodiments is formed in the thermal-storage container 23. Therefore, since these layers enable satisfactorily realization of all of the evaporation prevention function, the leakage prevention function and the pressure relaxation function, it is possible to stably store a thermal-storage solution in the thermal-storage container 23, and thus obtaining a thermal-storage device 20F having excellent handling properties.

While the compressor 26 was exemplified as the heat source in the present embodiment, the heat source is not limited thereto and may be the other heat source included in an apparatus such as an air conditioner to which the thermal-storage device 20F according to the present invention is applied. The heat source may be provided outside the thermal-storage solution layer 11 and is not necessarily provided outside the thermal-storage container 23. The periphery of the heat source may not be surrounded by the thermal-storage container 23. For example, as long as the compressor 26 has a wide flat side, the heat source may be configured to bring a flat surface of the thermal-storage solution layer 11 into contact with a flat surface of the compressor. In the present embodiment, the periphery of the compressor 26 is surrounded by the thermal-storage container 23, and the bottom surface or top surface of the compressor 26 may be surrounded thereby. The heat source may be other than the compressor 26.

### (Seventh Embodiment)

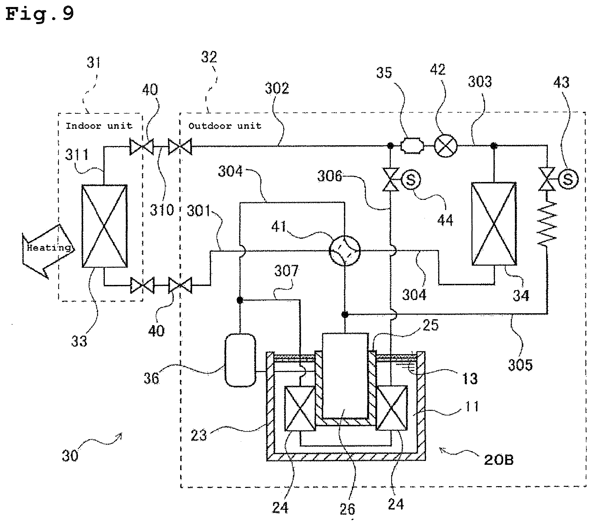

While the above first to seventh embodiments exemplify configurations of a thermal-storage device, in the present embodiment, an example of an air conditioner as a typical application example of the thermal-storage device having the above configuration will be described in detail with reference to Fig. 9.

### [Configuration of Air Conditioner]

As shown in Fig. 9, an air conditioner 30 according to the present embodiment includes an indoor unit 31 and an outdoor unit 32 which are connected to each other via a refrigerant pipe. The outdoor unit 32 is provided with the thermal-storage device 20F according the sixth embodiment. The indoor unit 31, the outdoor unit 32, and an external pipe 310 are connected to an indoor unit internal pipe 311, and a first pipe 301 and a second pipe 302 as an outdoor unit internal pipe via a pipe coupling 40.

The indoor unit 31 is provided therein with an indoor unit internal pipe 311, indoor heat exchanger 33, and the like and the outdoor unit 32 is provided therein with a thermal-storage device 20B, a compressor 26, various internal pipes of the outdoor unit, an outdoor heat exchanger 34, various valve members, and the like. Then, since the indoor unit 31 and the outdoor unit 32 are connected to each other via the external pipe 310 as mentioned above, a refrigeration cycle of the air conditioner 30 is structured with the above configuration. In the following description, within the refrigerant pipe (e.g., the indoor unit internal pipe 311, the external pipe 310, and the outdoor unit internal pipe), an upstream side or a downstream side in a refrigerant flowing direction are simply referred to as an upstream side or a downstream side.

A configuration of the indoor unit 31 will be described in detail below. The indoor unit internal pipe 311 connected to the external pipe 310 is further connected to an indoor heat exchanger 33. Further, the indoor unit 31 is provided therein with a blower fan (not shown), upper and lower blades (not shown), and right and left blades (not shown), in addition to the indoor heat exchanger 33.

The indoor heat exchanger 33 performs a heat exchange between indoor air absorbed into the indoor unit 31 by a blower fan and the refrigerant flowing in the indoor heat exchanger 33 and blows out the air warmed by the heat exchange into a room during heating period (in a direction of a block arrow in the drawing), whereas, blows out air cooled by the heat exchange into the room during cooling period. The upper and the lower blades change a direction of air blown out from the indoor unit 31 to up-and-down direction as required and the right and left blades change a direction of air blown out from the indoor unit 31 to right-and-left direction as required. Detailed description of a configuration of the indoor unit 31 (e.g., the blower fan, the upper and lower blades, and the right and left blades) is omitted in Fig. 9 for the convenience sake of description.

A configuration of the outdoor unit 32 will be described in detail below. The outdoor unit 32 is provided therein with a strainer 35, an expansion valve 42, a four way valve 41, a first electromagnetic valve 43, a second electromagnetic valve 44, and an accumulator 36, in addition to the compressor 26, the thermal-storage device 20B, and the outdoor heat exchanger 34. In the first pipe 301 and the second pipe 302 connected to the external pipe 310, the first pipe 301 is connected to an exhaust port (not shown) of the compressor 26. Therefore, the compressor 26 is connected to the indoor heat exchanger 33 in the indoor unit 31.

The compressor 26 is provided, as described in the sixth embodiment, substantially integral with the thermal-storage container 23 of the thermal-storage device 20F and is further provided with the thermal-storage solution layer 11 in a manner positioned therearound via the thermally conductive member 25. The evaporation prevention layer 13 is formed on an upper surface of the thermal-storage solution layer 11. In Fig. 9, for the convenience sake of the description, a cover portion 232 and the air layer 12 constituting the thermal-storage container 23 are omitted from the illustration. The thermal-storage container 23 is provided therein with the heat regenerator 24 so as to be immersed in the thermal-storage solution layer 11 and an inlet (not shown) is connected to a sixth pipe 306. The sixth pipe 306 is provided with the second electromagnetic valve 44.

In the first pipe 301 and the second pipe 302 which are connected to the external pipe 310, the second pipe 302 is branched into a third pipe 303 and the sixth pipe 306 as the outdoor unit internal pipes . The second pipe 302 is provided with the strainer 35 and, as mentioned above, is connected to the external pipe 310 at one side and connected to the third pipe 303 via the expansion valve 42 at the other side. The sixth pipe 306 is branched from the second pipe 302 in an upstream side of the strainer 35.

The third pipe 303 establishes a connection between the expansion valve 42 and the outdoor heat exchanger 34 which is connected to an intake (not shown) of the compressor 26 via the fourth pipe 304. A side of the compressor 26 in the fourth pipe 304 is provided with the accumulator 36 for separating the liquid phase refrigerant from the vapor phase refrigerant. An exhaust portion of the compressor 26 is connected to the first pipe 301 as well as a fifth pipe 305 is branched from somewhere between the exhaust portion of the compressor 26 in the first pipe 301 and the four way valve 41. A first electromagnetic valve 43 is provided on a fifth pipe 305. The first pipe 301 is disposed at an intermediate position between the exhaust port of the compressor 26 and the indoor heat exchanger 33 and in a side of the outdoor unit 32.

The sixth pipe 306 branched from the second pipe 302 is connected, as mentioned above, to an inlet (not shown) of the heat regenerator 24, whereas, an outlet (not shown) of the heat regenerator 24 is connected to the fourth pipe 304 via a seventh pipe 307. The seventh pipe 307 is branched from the fourth pipe 304 at a position in an upstream side viewed from the accumulator 36.

The first pipe 301 and the fourth pipe 304 are connected to each other via the four way valve 41 at an intermediate portion therebetween. More specifically, the first pipe 301 is provided with the four way valve 41 in an upstream side of a position wherefrom a fifth pipe 305 is branched and the fourth pipe 304 is provided with the four way valve 41 at a position in an upstream side of a position wherefrom the seventh pipe 307 is branched and in a downstream side from a position to be connected to the outside heat exchanger 34.

In the outdoor unit internal pipes, the fourth pipe 304 constitutes the heat pump circulating passage and the fifth pipe 305 and the sixth pipe 306 constitute a refrigerant bypass path. In other words, the air conditioner 30 according to the present embodiment has a configuration of a heat pump type. With the configuration, as mentioned below, the heating operation can be performed in parallel with a defrosting operation without being stopped. This point is mentioned hereinafter.

A configuration of each device or each member except for the compressor 26 and the thermal-storage device 20B (e.g., the refrigerant pipe, the pipe coupling 40, the indoor heat exchanger 33, the blower fan, the upper and lower blades, the right and left blades, the outdoor heat exchanger 34, the strainer 35, the expansion valve 42, the four way valve 41, the first electromagnetic valve 43, the second electromagnetic valve 44, and the accumulator 36) is not limited to any specific configuration but any publicly known configuration can be suitably used. The number and the position of each device and each member including the compressor 26 and the thermal-storage device 20B are not limited to the configuration shown in Fig. 5 but may be any other position capable of realizing the configuration of the heat pump type thermal-storage device.

The compressor 26, the blower fan, the upper and lower blades, the right and left blades, the four way valve 41, the expansion valve 42, the first electromagnetic valve 43, the second electromagnetic valve 44, and the like are electrically connected to a control system (not shown but, for example, a micro computer) and are controlled by the control system.

### [Operation of Air Conditioner]

An operation of the air conditioner 30 having the above configuration will be described in detail below by exemplifying a normal heating operation and a defrosting/heating operation with reference to Fig. 5.

Initially, the normal heating operation will be described below. In this case, the first electromagnetic valve 43 and the second electromagnetic valve 44 are subjected to a close control and the refrigerant discharged from the exhaust port of the compressor 26 flows through the first pipe 301 to reach the indoor heat exchanger 33 from the four way valve 41 via the external pipe 310 and the indoor unit internal pipe 311. In the indoor heat exchanger 33, the refrigerant is condensed by a heat exchange with the indoor air. The refrigerant flows through the second pipe 302 from the indoor heat exchanger 33 to reach the expansion valve 42 whereat being decompressed. Thus decompressed refrigerant passes through the third pipe 303 to reach the outdoor heat exchanger 34. In the outdoor heat exchanger 34, the refrigerant is evaporated due to the heat exchange with the outdoor air and the refrigerant flows through the fourth pipe 304 to return to an intake of the compressor 26 from the four way valve 41. Heat (waste heat) generated at the compressor 26 is stored in the thermal-storage solution layer 11 within the thermal-storage container 23 from the external wall of the compressor 26 via the thermally conductive member 25.

The defrosting/heating operation will be described below. During the normal heating operation, if frost is formed in the outdoor heat exchanger 34 to grow therein, a ventilation resistance of the outdoor heat exchanger 34 increases and thus an air flow rate decreases, resulting in a drop in an evaporation temperature within the outdoor heat exchanger 34. Therefore, when a temperature sensor (not shown) for detecting a temperature of the pipe of the outdoor heat exchanger 34 detects the drop of the evaporation temperature in comparison with a case of a non-frosted state, the control system outputs an instruction from the normal heating operation to the defrosting/heating operation.

When the operation is shifted from the normal heating operation to the defrosting/heating operation, the first electromagnetic valve 43 and the second electromagnetic valve 44 are subjected to an open control in which, in addition to a flow of refrigerant during the above normal heating operation, a portion of the vapor phase refrigerant coming out from the exhaust port of the compressor 26 flows through the fifth pipe 305 and the first electromagnetic valve 43 to join the refrigerant flowing through the third pipe 303, resulting in heating of the outdoor heat exchanger 34 and turning of the refrigerant into a liquid phase. Then, the refrigerant flows through the fourth pipe 304 to return to the intake of the compressor 26 via the four way valve 41 and the accumulator 36.

A portion of the liquid phase refrigerant diverted at somewhere between the indoor heat exchanger 33 and the strainer 35 in the second pipe 302 is evaporated and turned into the gas phase such that the heat regenerator 24 absorbs heat from the thermal-storage solution layer 11 via the sixth pipe 306 and the second electromagnetic valve 44. The vapor phase refrigerant flows through the seventh pipe 307 to join the refrigerant flowing through the fourth pipe 304, resulting in returning to the intake of the compressor 26 from the accumulator 36.

The refrigerant returning to the accumulator 36 includes liquid phase refrigerant returned from the outdoor heat exchanger 34. A mixture of the liquid phase refrigerant with the vapor phase refrigerant returned from the heat regenerator 24 at a high temperature accelerates the evaporation of the liquid phase refrigerant. Accordingly, returning of the liquid phase refrigerant to the compressor 26 passing through the accumulator 36 is avoided, thereby being able to improve reliability of the compressor 26.

The outdoor heat exchanger 34 having been below zero due to adhesion of frost upon starting the defrosting/heating is heated by the vapor phase refrigerant flowing out from the exhaust port of the compressor 26, resulting in causing the frost to melt at around zero. After the frost is completely molten, the temperature of the outdoor heat exchanger 34 comes to rise again. If the temperature rise of the outdoor heat exchanger 34 is detected by the temperature sensor, the control system determines that the defrosting is completed and outputs the instruction from the defrosting/heating operation to the normal heating operation.

As mentioned above, in the present embodiment, the air conditioner 30 is the heat pump type air conditioner, so that even if the frost is formed in the outdoor heat exchanger 34 during the heating operation or in the winter season, the refrigerant is caused to flow through the fifth pipe 305 and the sixth pipe 306 as the refrigerant bypass paths, thereby enabling heat recollection and defrosting. Therefore, the heating operation can be performed in parallel with the defrosting operation, so that, for example, in a chilly morning in the winter season, the heating can be achieved in short period of time. The waste heat from the compressor 26 can be recollected effectively, so that an operation in energy conservation can be performed.

In the thermal-storage device 20F, as mentioned in the sixth embodiment, since the evaporation prevention layer 13 is formed in the thermal-storage container 23, the thermal-storage solution can be effectively prevented from being excessively evaporated (realization of the evaporation prevention function), and also leakage of the thermal-storage solution out of the thermal-storage container 23 and the exposure to the air layer 12 can be suppressed (realization of the leakage prevention function). Still further, even if the pressure of the thermal-storage solution layer 11 significantly rises, steam or free gas is partially comes off from the liquid evaporation prevention layer 13 to the air layer 12, so that the pressure would not rise excessively and the sufficient treatment can be taken against the rise of pressure of the thermal-storage solution (realization of the pressure relaxation function).

In the present embodiment, the air conditioner 30 has, but not limited to, a configuration of the heat pump type but, needless to say, may have a configuration other than the heat pump type. Instead of the thermal-storage device 20F, any one of the thermal-storage devices 20A to 20E described in the above first to fifth embodiments can be equipped or the thermal-storage device of the other configuration within the scope of the present invention can be equipped. In the present embodiment, the compressor 26 is used as the heat source, and other device such as an electric heater may be used as the heat source.

In the air conditioner is exemplified as an example to which the thermal-storage device 20A to 20F according to the present invention is applied; however, needless to say, the present invention is not limited thereto but can be suitably used to various types of devices provided with the thermal-storage device other than the air conditioner. More specifically, for example, a refrigerator, a hot water supply, a heat pump type washing machine can be exemplified.

The present invention is not limited to the description of each embodiment of the present invention but can be made into various modifications within the scope of claims of the invention. An embodiment obtained by a combination of technical means disclosed in each of the different embodiments and a plurality of modifications is also encompassed within a technical scope of the present invention.

The present application claims priority of the basic applications of Japanese Patent Applications, JP 2010-216443, JP 2010-248071 and JP 2010-216441. JP 2010-216443, JP 2010-248071 and JP 2010-216441 are incorporated herein by reference.

### Industrial Applicability

Not only the present invention can be preferably employed in a thermal-storage device and an air conditioner, but also it can be effectively employed in a refrigerator, a hot water supply, a heat pump type washing machine and the like.

### Description of Reference Numerals

- 11: Thermal-storage solution layer
- 12: Air layer
- 13: Evaporation prevention layer
- 18: Heat exchanger connector
- 20A, 20B, 20C, 20D, 20E, 20F: Thermal-storage device
- 21, 23: Thermal-storage container
- 22, 24: Thermal-storage type heat exchanger
- 25: Thermal conductive member
- 26: Compressor (Heat source, Heater)
- 214, 234: Vent hole
- 214A: Internal pressure control unit

## Claims

1. A thermal-storage device (20A, 20B, 20C, 20D, 20E, 20F) comprising a thermal-storage container (21,23) in which a thermal-storage solution layer (11) composed of a thermal-storage solution comprising water, a heat exchanger (22, 24) immersed in the thermal-storage solution layer (11), an evaporation prevention layer (13) disposed on the upper portion of the thermal-storage solution layer (11), and an air layer (12) disposed on the upper portion of the evaporation prevention layer (13) are disposed in the interior space thereof,wherein the evaporation prevention layer (13) comprises a solvent composition of at least one water-insoluble solvent and the solvent composition has a pour point lower than normal temperature, **characterized in that**
the water-insoluble solvent contains saturated alkanes containing at least one hydrocarbon having carbon atoms within a range from 24 to 44,
wherein the saturated alkanes are formed when α-olefin having 8 to 10 carbon atoms is subjected to a hydrogenation treatment after a polymerization reaction.

2. The thermal-storage device (20A, 20B, 20C, 20D, 20E, 20F) according to claim 1, wherein the solvent composition has a pour point lower than a solidifying point of the thermal-storage solution.

3. The thermal-storage device (20A, 20B, 20C, 20D, 20E, 20F) according to claim 1, further comprising a protection unit (18) that is disposed so as to come in contact with an interface between one layer selected from the group consisting of the thermal-storage solution layer (11), the evaporation prevention layer (13), and the air layer (12), and is configured to isolate the heat exchanger (22, 24) from the interface.

4. The thermal-storage device (20A, 20B, 20C, 20D, 20E, 20F) according to claim 3, wherein the thermal-storage container (21, 23) includes a cover portion (212) provided with an opening through which the heat exchanger (22, 24) passes, and
the protection unit (18) is a heat exchanger connector (21, 23) connecting the cover portion (212) to the heat exchanger (22, 24) .

5. The thermal-storage device (20A, 20B, 20C, 20D, 20E, 20F) according to claim 3, wherein the thermal-storage container (21, 23) includes a cover portion (212) having an opening through which the heat exchanger (22, 24) passes, and
the opening is disposed in a recessed portion (74) provided in a part of the cover portion (212), and the recessed portion (74) is disposed to come in contact with the interface to form the protection unit (18).

6. The thermal-storage device (20A, 20B, 20C, 20D, 20E, 20F) according to claim 4 or 5, wherein the cover portion (212) is provided with an internal pressure control unit (214A) configured to enable communication between the air layer (12) and the atmosphere at the position in contact with the air layer (12).

7. The thermal-storage device (20A, 20B, 20C, 20D, 20E, 20F) according to any one of claims 3 to 6, wherein the heat exchanger (22, 24) is partially made of copper or aluminum.

8. The thermal-storage device (20A, 20B, 20C, 20D, 20E, 20F) according to claim 1, wherein the thermal-storage solution is an aqueous solution containing a dihydric alcohol.

9. The thermal-storage device (20A, 20B, 20C, 20D, 20E, 20F) according to claim 8, wherein the thermal-storage solution is an aqueous solution containing an antioxidant preventing oxidation of the dihydric alcohol.

10. The thermal-storage device (20A, 20B, 20C, 20D, 20E, 20F) according to claims 1, wherein the thermal-storage solution is an aqueous solution with pH 6 to 11.

11. The thermal-storage device (20A, 20B, 20C, 20D, 20E, 20F) according to claim 8, wherein the thermal-storage solution contains, as a main component, a mixed solution of water and an unfreezable dihydric alcohol.

12. The thermal-storage device according to claim 11, wherein the unfreezable dihydric alcohol (s) is/are ethylene glycol and/or propylene glycol.

13. The thermal-storage device (20A, 20B, 20C, 20D, 20E, 20F) according to claim 1, wherein the thermal-storage container (21, 23) is provided so as to surround a heat source (26).

14. The thermal-storage device (20A, 20B, 20C, 20D, 20E, 20F) according to claim 13, wherein the thermal-storage container (21, 23) is in contact with the heat source (26) via a thermal conductive member (25).

15. An air conditioner comprising the thermal-storage device (20A, 20B, 20C, 20D, 20E, 20F) according to any one of claims 1 to 14.

## Patentansprüche

1. Wärmespeichervorrichtung (20A, 20B, 20C, 20D, 20E, 20F) einen Wärmespeicherbehälter (21, 23) enthaltend, in dessen Innenraum eine aus einer Wasser enthaltenden Wärmespeicherlösung zusammengesetzte Wärmespeicherlösungsschicht (11), ein in der Wärmespeicherlösungsschicht (11) eingetauchter Wärmetauscher (22, 24), eine auf dem oberen Teil der Wärmespeicherlösungsschicht (11) angeordnete Verdampfungsverhinderungsschicht (13), und eine auf dem oberen Teil der Verdampfungsverhinderungsschicht (13) angeordnete Luftschicht (12), angeordnet sind,
wobei die Verdampfungsverhinderungsschicht (13) eine Lösungsmittelzusammensetzung aus mindestens einem wasserunlöslichen Lösungsmittel enthält und die Lösungsmittelzusammensetzung einen Pourpoint unter Normaltemperatur aufweist,
**dadurch gekennzeichnet, dass**
das wasserunlösliche Lösungsmittel gesättigte Alkane beinhaltet, die mindestens einen Kohlenwasserstoff mit einer Anzahl von Kohlenstoffatomen in einem Bereich von 24 bis 44 beinhalten,
wobei die gesättigten Alkane gebildet werden, wenn ein 8 bis 10 Kohlenstoffatome aufweisendes α-Olefin einem Hydrierverfahren nach einer Polymerisierungsreaktion unterzogen wird.

2. Wärmespeichervorrichtung (20A, 20B, 20C, 20D, 20E, 20F) nach Anspruch 1, wobei die Lösungsmittelzusammensetzung einen Pourpoint unter einem Stockpunkt der Wärmespeicherlösung aufweist.

3. Wärmespeichervorrichtung (20A, 20B, 20C, 20D, 20E, 20F) nach Anspruch 1, ferner enthaltend ein Schutzelement (18), welches so angeordnet ist, dass es mit einer Grenzfläche zwischen einer Schicht ausgewählt aus der Gruppe beinhaltend die Wärmespeicherlösungsschicht (11), die Verdampfungsverhinderungsschicht (13), und die Luftschicht (12), in Kontakt kommt, und dazu eingerichtet ist den Wärmetauscher (22, 24) von der Grenzfläche zu isolieren.

4. Wärmespeichervorrichtung (20A, 20B, 20C, 20D, 20E, 20F) nach Anspruch 3,
wobei der Wärmespeicherbehälter (21, 23) ein Abdeckteil (212) enthält, welches mit einer Öffnung ausgestattet ist, durch welche der Wärmetauscher (22, 24) verläuft; und
das Schutzelement (18) ein Wärmetauscheranschluss (21, 23) ist, der das Abdeckteil (212) mit dem Wärmetauscher (22, 24) verbindet.

5. Wärmespeichervorrichtung (20A, 20B, 20C, 20D, 20E, 20F) nach Anspruch 3,
wobei der Wärmespeicherbehälter (21, 23) ein Abdeckteil (212) enthält, welches eine Öffnung aufweist, durch die der Wärmetauscher (22, 24) verläuft; und
die Öffnung angeordnet ist in einem vertieften Abschnitt (74), bereitgestellt in einem Abschnitt des Abdeckteils (212), und der vertiefte Abschnitt (74) angeordnet ist, um mit der Grenzfläche in Kontakt zu kommen, um das Schutzelement (18) zu bilden.

6. Wärmespeichervorrichtung (20A, 20B, 20C, 20D, 20E, 20F) nach einem der Ansprüche 4 oder 5, wobei das Abdeckteil (212) an der Stelle, die in Verbindung mit der Luftschicht (12) steht, mit einer Innendruckkontrolleinrichtung (214A) ausgestattet ist, die dazu eingerichtet ist, Austausch zwischen der Luftschicht (12) und der Atmosphäre zu ermöglichen.

7. Wärmespeichervorrichtung (20A, 20B, 20C, 20D, 20E, 20F) nach einem der Ansprüche 3 bis 6; wobei der Wärmetauscher (22, 24) teilweise aus Kupfer oder Aluminium gefertigt ist.

8. Wärmespeichervorrichtung (20A, 20B, 20C, 20D, 20E, 20F) nach Anspruch 1, wobei die Wärmespeicherlösung eine wässrige Lösung ist, die einen zweiwertigen Alkohol beinhaltet.

9. Wärmespeichervorrichtung (20A, 20B, 20C, 20D, 20E, 20F) nach Anspruch 8, wobei die Wärmespeicherlösung eine wässrige Lösung ist, die ein Antioxidationsmittel beinhaltet, um die Oxidation des zweiwertigen Alkohols zu verhindern.

10. Wärmespeichervorrichtung (20A, 20B, 20C, 20D, 20E, 20F) nach Anspruch 1, wobei die Wärmespeicherlösung eine wässrige Lösung mit einem pH-Wert von 6 bis 11 ist.

11. Wärmespeichervorrichtung (20A, 20B, 20C, 20D, 20E, 20F) nach Anspruch 8, wobei die Wärmespeicherlösung als Hauptbestandteil eine gemischte Lösung aus Wasser und nicht-gefrierbaren zweiwertigen Alkohol beinhaltet.

12. Wärmespeichervorrichtung nach Anspruch 11, wobei die nicht-gefrierbaren zweiwertigen Alkohole, Ethylenglykol und/oder Propylenglykol sind.

13. Wärmespeichervorrichtung (20A, 20B, 20C, 20D, 20E, 20F) nach Anspruch 1, wobei der Wärmespeicherbehälter (21, 23) eingerichtet, ist eine Wärmequelle (26) zu umgeben.

14. Wärmespeichervorrichtung (20A, 20B, 20C, 20D, 20E, 20F) nach Anspruch 13, wobei der Wärmespeicherbehälter (21, 23) mittels eines thermisch leitfähigen Elements (25) mit der Wärmequelle (26) in Kontakt ist.

15. Klimaanlage, die Wärmespeichervorrichtung (20A, 20B, 20C, 20D, 20E, 20F) nach einem der Ansprüche 1 bis 14 enthaltend.

## Revendications

1. Dispositif de stockage thermique (20A, 20B, 20C, 20D, 20E, 20F) comprenant un récipient de stockage thermique (21, 23) dans lequel une couche de solution de stockage thermique (11) composée d'une solution de stockage thermique comprenant de l'eau, un échangeur de chaleur (22, 24) immergé dans la couche de solution de stockage thermique (11), une couche de prévention d'évaporation (13) disposée sur la partie supérieure de la couche de solution de stockage thermique (11), et une couche d'air (12) disposée sur la partie supérieure de la couche de prévention d'évaporation (13) sont disposés dans l'espace intérieur de celui-ci,
dans lequel la couche de prévention d'évaporation (13) comprend une composition de solvant d'au moins un solvant insoluble dans l'eau et la composition de solvant a un point d'écoulement inférieur à la température normale,
**caractérisé en ce que**
le solvant insoluble dans l'eau contient des alcanes saturés contenant au moins un hydrocarbure ayant des atomes de carbone dans une plage allant de 24 à 44,
dans lequel les alcanes saturés sont formés lorsqu'une α-oléfine ayant de 8 à 10 atomes de carbone est soumise à un traitement d'hydrogénation après une réaction de polymérisation.

2. Dispositif de stockage thermique (20A, 20B, 20C, 20D, 20E, 20F) selon la revendication 1, dans lequel la composition de solvant a un point d'écoulement inférieur à un point de solidification de la solution de stockage thermique.

3. Dispositif de stockage thermique (20A, 20B, 20C, 20D, 20E, 20F) selon la revendication 1, comprenant en outre une unité de protection (18) qui est disposée de manière à venir en contact avec une interface entre une couche choisie dans le groupe constitué par la couche de solution de stockage thermique (11), la couche de prévention d'évaporation (13), et la couche d'air (12), et est configurée pour isoler l'échangeur de chaleur (22, 24) de l'interface.

4. Dispositif de stockage thermique (20A, 20B, 20C, 20D, 20E, 20F) selon la revendication 3,
dans lequel le récipient de stockage thermique (21, 23) inclut une partie couvercle (212) pourvue d'une ouverture à travers laquelle passe l'échangeur de chaleur (22, 24), et
l'unité de protection (18) est un raccord d'échangeur de chaleur (21, 23) reliant la partie couvercle (212) à l'échangeur de chaleur (22, 24).

5. Dispositif de stockage thermique (20A, 20B, 20C, 20D, 20E, 20F) selon la revendication 3,
dans lequel le récipient de stockage thermique (21, 23) inclut une partie couvercle (212) ayant une ouverture à travers laquelle passe l'échangeur de chaleur (22, 24), et
l'ouverture est disposée dans une partie évidée (74) disposée dans une partie de la partie couvercle (212), et la partie évidée (74) est disposée de manière à venir en contact avec l'interface pour former l'unité de protection (18).

6. Dispositif de stockage thermique (20A, 20B, 20C, 20D, 20E, 20F) selon la revendication 4 ou 5, dans lequel la partie couvercle (212) est pourvue d'une unité de commande de pression interne (214A) configurée pour permettre une communication entre la couche d'air (12) et l'atmosphère à la position en contact avec la couche d'air (12).

7. Dispositif de stockage thermique (20A, 20B, 20C, 20D, 20E, 20F) selon l'une quelconque des revendications 3 à 6, dans lequel l'échangeur de chaleur (22, 24) est partiellement constitué de cuivre ou d'aluminium.

8. Dispositif de stockage thermique (20A, 20B, 20C, 20D, 20E, 20F) selon la revendication 1, dans lequel la solution de stockage thermique est une solution aqueuse contenant un alcool dihydrique.

9. Dispositif de stockage thermique (20A, 20B, 20C, 20E, 20F) selon la revendication 8, dans lequel la solution de stockage thermique est une solution aqueuse contenant un antioxydant empêchant l'oxydation de l'alcool dihydrique.

10. Dispositif de stockage thermique (20A, 20B, 20C, 20D, 20E, 20F) selon la revendication 1, dans lequel la solution de stockage thermique est une solution aqueuse ayant un pH de 6 à 11.

11. Dispositif de stockage thermique (20A, 20B, 20C, 20D, 20E, 20F) selon la revendication 8, dans lequel la solution de stockage thermique contient, en tant que composant principal, une solution mixte d'eau et d'un alcool dihydrique non gelable.

12. Dispositif de stockage thermique selon la revendication 11, dans lequel le ou les alcool(s) dihydrique(s) non gelable(s) est/sont l'éthylène glycol et/ou le propylène glycol.

13. Dispositif de stockage thermique (20A, 20B, 20C, 20D, 20E, 20F) selon la revendication 1, dans lequel le récipient de stockage thermique (21, 23) est disposé de manière à entourer une source de chaleur (26).

14. Dispositif de stockage thermique (20A, 20B, 20C, 20D, 20E, 20F) selon la revendication 13, dans lequel le récipient de stockage thermique (21, 23) est en contact avec la source de chaleur (26) par l'intermédiaire d'un élément conducteur thermique (25).

15. Climatisuer comprenant le dispositif de stockage thermique (20A, 20B, 20C, 20D, 20E, 20F) selon l'une quelconque des revendications 1 à 14.
